# EUROPEAN PATENT APPLICATION

(11) **EP 3 528 192 A1**
(43) Date of publication of application: **21.08.2019**
(21) Application number: 17865484.4
(22) Date of filing: 28.03.2017
(51) Int. Cl.: G06Q 20/40, G06Q 20/32

(54) **TRANSACTION METHOD, PAYMENT DEVICE, VERIFICATION DEVICE AND SERVER**

(30) Priority: 31.10.2016 CN 201610928978
(71) Applicant: Huawei Technologies Co., Ltd., Longgang District Shenzhen, Guangdong 518129 (CN)
(72) Inventor: WANG, Sishan, Shenzhen Guangdong 518129 (CN); MEI, Jingqing, Shenzhen Guangdong 518129 (CN)
(74) Representative: Körber, Martin Hans
(86) International application number: PCT/CN2017/078457
(87) International publication number: WO 2018/076607

(57) **Abstract**

This application provides a transaction method, a payment device, a verification device, and a server. The method includes: determining, by a payment device, a target password-free limit of a payment account that is used to perform a current transaction, where the target password-free limit is a password-free limit that is in a plurality of password-free limits and that is corresponding to a target verification method of a verification device, and there is a correspondence between the plurality of password-free limits and a plurality of verification methods; and after the verification performed by the verification device on an identity of an owner of the payment account by using the target verification method succeeds, setting, by the payment device, a payment status of the payment device to a password-free payment state for the target password-free limit based on the target password-free limit, so that the payment device can implement password-free payment when a transaction amount of the current transaction is less than or equal to the target password-free limit. Therefore, respective verification features of different verification methods can be fully used to meet a requirement of verifying an identity of an owner of a payment account in payment scenarios having different security requirements.

## Description

This application claims priority to Chinese Patent Application No. 201610928978.3, filed with the Chinese Patent Office on October 31, 2016 and entitled "TRANSACTION METHOD AND TRANSACTION TERMINAL", which is incorporated herein by reference in its entirety.

### TECHNICAL FIELD

This application relates to the field of electronic devices, and more specifically, to a transaction method, a payment device, a verification device, and a server.

### BACKGROUND

As a payment carrier is transitioned from a physical card to a mobile device, a particular cardholder verification method (Cardholder Verification Method, CVM) is currently proposed, namely, a consumer device cardholder verification method (Consumer Device CVM, CDCVM), and verification on an identity of a cardholder may be completed on the mobile device such as a mobile phone by using a fingerprint or a digital password.

With development of wearable devices, gradually the wearable device bound to the mobile device may start to be used as an auxiliary payment tool of the mobile phone. The wearable device is widely used in a transaction verification phase, and is used to verify an identity of an owner of a payment account. Using the wearable device to verify the identity of the owner of the payment account can bring better user experience. In addition, because a verification device needs to cooperate with a payment device in a verification process, security can also be ensured. However, when the wearable device is used to verify the identity of the owner of the payment account, different verification methods supported by the wearable device have respective features, for example, respective security levels. Therefore, how to fully use respective verification features of different verification methods to meet a requirement of verifying the identity of the owner of the payment account in payment scenarios having different security requirements is an urgent problem that needs to be resolved currently.

### SUMMARY

This application provides a transaction method, a payment device, a verification device, and a server, so that respective verification features of different verification methods can be fully used to meet a requirement of verifying an identity of an owner of a payment account in payment scenarios having different security requirements.

According to a first aspect, a transaction method is provided, including: determining, by a payment device, a target password-free limit of a payment account that is used to perform a current transaction, where the target password-free limit is a password-free limit that is in a plurality of password-free limits and that is corresponding to a target verification method of a verification device, the target verification method is used by the verification device to verify an identity of an owner of the payment account, there is a correspondence between the plurality of password-free limits and a plurality of verification methods, and the payment device, the verification device, and the payment account have been associated with each other; and after the verification performed by the verification device on the identity of the owner of the payment account by using the target verification method succeeds, setting, by the payment device, a payment status of the payment account to a password-free payment state for the target password-free limit based on the target password-free limit, so that the payment account can implement password-free payment when a transaction amount of the current transaction is less than or equal to the target password-free limit.

In this way, different password-free limits are set for verification methods with different security levels. Therefore, respective verification features of different verification methods are fully used to provide different levels of password-free capabilities, thereby meeting a requirement of verifying an identity of an owner of a payment account in payment scenarios having different security requirements, and implementing password-free payment for a transaction while improving security of the transaction.

Optionally, in an implementation of the first aspect, the determining, by a payment device, a target password-free limit of a payment account that is used to perform a current transaction includes: sending, by the payment device, first instruction information to the verification device, where the first instruction information is used to instruct the verification device to verify the identity of the owner of the payment account by using a verification method with a highest priority in a first list stored in the verification device, and the first list includes at least one verification method supported by the verification device; receiving, by the payment device, a verification result sent by the verification device according to the first instruction information, where the verification result includes an identifier used to indicate the verification method with the highest priority; and determining, by the payment device, the verification method with the highest priority as the target verification method, and determining, based on the target verification method and a second list stored in the payment device, that the password-free limit corresponding to the target verification method is the target password-free limit, where the second list includes the correspondence between the plurality of verification methods and the plurality of password-free limits, and the plurality of verification methods include the at least one verification method in the first list.

It should be noted that the second list includes the correspondence between the plurality of verification methods and the plurality of password-free limits. The plurality of verification methods recorded in the second list may include a verification method supported by at least one verification device. This is equivalent to a list with a largest range. Certainly, the big list also includes the at least one verification method, in the first list, supported by the verification device that performs the current transaction.

The first list includes at least the at least one verification method supported by the verification device. The first list may include the at least one verification method supported by the verification device and priority information corresponding to the at least one verification method, for example, the first list is in a form: (method 1, priority 1), ..., (method X, priority X). Alternatively, the first list includes the at least one verification method supported by the verification device and at least one password-free limit corresponding to the at least one verification method, for example, the first list is in a form: (method 1, limit 1), ..., (method X, limit X). In this way, when the payment device does not store the second list, the verification device can determine the corresponding target password-free limit after determining the target verification method to be used by the verification device, to notify the payment device of the target password-free limit. Further, the first list may alternatively include all the at least one verification method supported by the verification device, priority information of the at least one verification method, and at least one password-free limit corresponding to the at least one verification method, for example, the first list is in a form: (method 1, priority 1, limit 1), ..., (method X, priority X, limit X).

The second list that may be stored in the payment device should include a plurality of verification methods and a password-free limit corresponding to each verification method. For example, the second list is in a form: (method 1, limit 1), (method 2, limit 2), ..., (method X, limit X), or the second is in a form: [device 1: (method 1, limit 1), device 2: (method 2, limit 2), ..., device X: (method X, limit X)...]. The plurality of verification methods include a verification method supported by at least one verification device. Certainly, the plurality of verification methods also include the verification method supported by the verification device that participates in the current transaction.

The password-free limit corresponding to each verification method in the second list may be determined by a server based on a security level of each verification method. For example, a verification method with a higher security level is corresponding to a higher password-free limit, and a verification method with a lower security level is corresponding to a lower password-free limit.

A priority of each verification method in the at least one verification method in the first list is in direct proportion to a security level of the verification method, and a verification method with a higher security level has a higher priority. If the first list also includes a password-free limit corresponding to each verification method, the password-free limit corresponding to each verification method in the first list may also be determined by the server based on the security level of each verification method. In this case, a verification method with a higher security level has a higher priority and a higher password-free limit, that is, the verification method can support a higher limit of password-free payment.

For example, if the verification device is glasses and a used verification method is iris verification, a corresponding password-free limit that is set for the verification method based on a security level of the verification method may be 500. If the verification device is a wristband or a watch and a used verification method is vein verification, because the verification method has a relatively high security level, a relatively high password-free limit corresponding to the verification method may be set, for example, 2000. If the verification device is a mobile phone or a tablet computer and a used verification method is signature verification or encryption verification, a corresponding password-free limit that is set for the verification method based on a security level of the verification method may be 300. If the verification device is glasses, a wristband or a watch, or a mobile phone or a tablet computer, and a used verification method is secure distance verification, because secure distance verification has a relatively low security level, a relatively low password-free limit corresponding to the verification method may be set, for example, 50.

Optionally, in an implementation of the first aspect, the determining, by a payment device, a target password-free limit of a payment account that is used to perform a current transaction includes: sending, by the payment device, first instruction information to the verification device, where the first instruction information is used to instruct the verification device to verify the identity of the owner of the payment account by using a verification method with a highest priority in a first list, and the first list includes at least one verification method supported by the verification device, and further includes at least one password-free limit corresponding to the at least one verification method; and receiving, by the payment device, a verification result sent by the verification device according to the first instruction information, where the verification result includes the target password-free limit, and the target password-free limit is a password-free limit corresponding to the verification method with the highest priority.

Optionally, in an implementation of the first aspect, the password-free limit corresponding to the verification method with the highest priority is a maximum password-free limit in the first list.

Optionally, in an implementation of the first aspect, the determining, by a payment device, a target password-free limit of a payment account that is used to perform a current transaction includes: obtaining, by the payment device, transaction amount information of the transaction, where the transaction amount information includes the transaction amount of the transaction or an amount range of the transaction amount; and obtaining, by the payment device from the plurality of password-free limits based on the transaction amount information, the target password-free limit that matches the transaction amount information.

For example, a plurality of password-free limits in a second list include 50, 300, and 1000. If a current transaction amount is 6, the payment device or the verification device may select, as the target password-free limit, a password-free limit 50 that matches the current transaction amount. If a current transaction amount is 65, the payment device or the verification device may select, as the target password-free limit, a password-free limit 300 that matches the current transaction amount. For another example, password-free limits include 50, 300, and 1000. If an amount range of a current transaction amount is 0 to 50, the payment device or the verification device may select a password-free limit 50 as the target password-free limit. If an amount range of a current transaction amount is 50 to 300, the payment device or the verification device may select a password-free limit 300 as the target password-free limit. If an amount range of a current transaction amount is 300 to 1000, the payment device or the verification device may select a password-free limit 1000 as the target password-free limit.

Optionally, in an implementation of the first aspect, the obtaining, by the payment device based on the transaction amount information, the target password-free limit that matches the transaction amount information includes: sending, by the payment device, the transaction amount information to the verification device, so that the verification device determines, from a first list stored in the verification device, the target password-free limit that matches the transaction amount, and determines, based on the target password-free limit and the first list, the target verification method corresponding to the target password-free limit; and receiving, by the payment device, a verification result sent by the verification device, where the verification result includes the target password-free limit.

Optionally, in an implementation of the first aspect, the obtaining, by the payment device based on the transaction amount information, the target password-free limit that matches the transaction amount information includes: determining, by the payment device based on the transaction amount information from a second list stored in the payment device, the target password-free limit that matches the transaction amount; and
the method further includes: determining, by the payment device based on the target password-free limit and the second list, the target verification method corresponding to the target password-free limit; and sending, by the payment device, second instruction information to the verification device, where the second instruction information is used to instruct the verification device to verify the payment account by using the target verification method; or sending, by the payment device, the target password-free limit to the verification device, so that the verification device determines, based on the target password-free limit, the target verification method corresponding to the target password-free limit, and verifies the identity of the owner of the payment account based on the target verification method.

Optionally, in an implementation of the first aspect, the obtaining, by the payment device, transaction amount information of the transaction includes: obtaining, by the payment device, the transaction amount information entered by a user on the payment device; or receiving, by the payment device, the transaction amount information sent by a server.

Optionally, in an implementation of the first aspect, the verification device is a target verification device in N verification devices associated with the payment device, and N>1; and before the determining, by a payment device, a target password-free limit of a payment account that is used to perform a current transaction, the method further includes: determining, by the payment device, the target verification device from the N verification devices.

Optionally, in an implementation of the first aspect, the target verification device is a verification device indicated by first input performed by the user on the payment device; or the target verification device is a verification device to which a verification method with a highest priority in N first lists in the N verification devices belongs; or the target verification device is a verification device to which a maximum password-free limit in the N first lists belongs.

Optionally, in an implementation of the first aspect, before the determining, by a payment device, a target password-free limit of a payment account that is used to perform a current transaction, the method further includes: sending, by the payment device, a request message to the server, where the request message is used to request to enable a function of using the verification device to verify the identity of the owner of the payment account; and receiving, by the payment device, the second list sent by the server according to the request message, where a password-free limit corresponding to each verification method in the second list is determined by the server based on a security level of each verification method.

Optionally, in an implementation of the first aspect, before the determining, by a payment device, a target password-free limit of a payment account that is used to perform a current transaction, the method further includes: receiving, by the payment device, device information sent by the verification device, where the device information includes the at least one verification method supported by the verification device; sending, by the payment device, the request message to the server, where the request message includes the device information, and the request message is used to request to enable the function of using the verification device to verify the identity of the owner of the payment account; receiving, by the payment device, the first list sent by the server according to the device information, where the first list includes the at least one verification method that is verified by the server, or the first list includes the at least one verification method and the at least one password-free limit corresponding to the at least one verification method, and a password-free limit corresponding to each verification method in the first list is determined by the server based on a security level of each verification method; and sending, by the payment device, the first list to the verification device.

Optionally, in an implementation of the first aspect, the payment device includes a mobile phone, and the verification device includes a wearable device; or the payment device includes a wearable device, and the verification device includes a mobile phone.

According to a second aspect, a transaction method is provided, including: determining, by a verification device, a to-be-used target verification method, where the target verification method is used to verify an identity of an owner of a payment account that is used to perform a current transaction in a payment device, the target verification method is a verification method that is in at least one verification method supported by the verification device and that is corresponding to a target password-free limit of the payment account, there is a correspondence between the plurality of verification methods and a plurality of password-free limits, and the payment device, the verification device, and the payment account have been associated with each other; and verifying, by the verification device, the identity of the owner of the payment account based on the target verification method.

In this way, different password-free limits are set for verification methods with different security levels. Therefore, respective verification features of different verification methods are fully used to provide different levels of password-free capabilities, thereby meeting a requirement of verifying an identity of an owner of a payment account in payment scenarios having different security requirements, and implementing password-free payment for a transaction while improving security of the transaction.

Optionally, in an implementation of the second aspect, the determining, by a verification device, a to-be-used target verification method includes: receiving, by the verification device, first instruction information sent by the payment device, where the first instruction information is used to instruct the verification device to verify the identity of the owner of the payment account by using a verification method with a highest priority in a first list stored in the verification device, and the first list includes the at least one verification method supported by the verification device; and
the verifying, by the verification device, the identity of the owner of the payment account based on the target verification method includes: determining, by the verification device, the verification method with the highest priority as the target verification method, and verifying the identity of the owner of the payment account based on the target verification method.

Optionally, in an implementation of the second aspect, the method further includes: sending, by the verification device, a verification result to the payment device according to the first instruction information, where the verification result includes an identifier used to indicate the verification method with the highest priority, so that the payment device determines the verification method with the highest priority as the target verification method, and determines, based on the target verification method and a second list stored in the payment device, that a password-free limit corresponding to the target verification method is the target password-free limit, where the second list includes a correspondence between a plurality of verification methods and a plurality of password-free limits, and the plurality of verification methods include the at least one verification method in the first list.

Optionally, in an implementation of the second aspect, the method further includes: determining, by the verification device based on the verification method with the highest priority and the first list, the target password-free limit corresponding to the verification method with the highest priority, where the first list further includes the at least one password-free limit corresponding to the at least one verification method; and sending, by the verification device, a verification result to the payment device, where the verification result includes the target password-free limit.

Optionally, in an implementation of the second aspect, the password-free limit corresponding to the verification method with the highest priority is a maximum password-free limit in the first list.

Optionally, in an implementation of the second aspect, the determining, by a verification device, a to-be-used target verification method includes: receiving, by the verification device, transaction amount information sent by the payment device, where the transaction amount information includes a transaction amount that is of the transaction and that is entered by a user on the payment device or an amount range of the transaction amount; determining, by the verification device from the at least one password-free limit based on the transaction amount information, the target password-free limit that matches the transaction amount information; and determining, by the verification device based on the target password-free limit and a first list stored in the verification device, the target verification method corresponding to the target password-free limit; and
the method further includes: sending, by the verification device, a verification result to the payment device, where the verification result includes the target password-free limit.

Optionally, in an implementation of the second aspect, the determining, by a verification device, a to-be-used target verification method includes: receiving, by the verification device, second instruction information sent by the payment device, where the second instruction information is used to instruct the verification device to verify the identity of the owner of the payment account by using the target verification method, the target verification method is determined by the payment device based on the target password-free limit and a second list stored in the payment device, and the target password-free limit is determined by the payment device based on transaction amount information entered by a user, or is determined by the payment device based on transaction amount information obtained from a server.

Optionally, in an implementation of the second aspect, the determining, by a verification device, a to-be-used target verification method includes: receiving, by the verification device, the target password-free limit sent by the payment device, where the target password-free limit is determined by the payment device based on transaction amount information entered by a user, or is determined by the payment device based on transaction amount information obtained from a server; and determining, by the verification device based on the target password-free limit and a first list stored in the verification device, the target verification method corresponding to the target password-free limit.

Optionally, in an implementation of the second aspect, before the determining, by a verification device, a to-be-used target verification method, the method further includes: sending, by the verification device, device information of the verification device to the payment device, so that the payment device forwards the device information to the server, where the device information includes the at least one verification method supported by the verification device; and receiving, by the verification device, the first list forwarded by the payment device, or receiving the first list sent by the server, where the first list includes the at least one verification method that is verified by the server, or the first list includes the at least one verification method and the at least one password-free limit corresponding to the at least one verification method, and a password-free limit corresponding to each verification method in the first list is determined by the server based on a security level of each verification method.

Optionally, in an implementation of the second aspect, the payment device includes a mobile phone, and the verification device includes a wearable device; or the payment device includes a wearable device, and the verification device includes a mobile phone.

According to a third aspect, a transaction method is provided, including: receiving, by a server, a request message sent by a payment device, where the request message includes device information of a verification device, the device information includes at least one verification method supported by the verification device, the at least one verification method is used to verify an identity of an owner of a payment account that is used to perform a transaction in the payment device, and the request message is used to request to enable a function of using the verification device to verify the identity of the owner of the payment account; verifying, by the server, the at least one verification method, and determining a first list based on a security level of the at least one verification method, where the first list includes the at least one verification method that is verified by the server, or includes the at least one verification method and at least one password-free limit corresponding to the at least one verification method; and sending, by the server, the first list to the verification device; or sending, by the server, the first list to the payment device, so that the payment device forwards the first list to the verification device.

In this way, the server sets different password-free limits for verification methods with different security levels. Therefore, respective verification features of different verification methods are fully used to provide different levels of password-free capabilities, thereby meeting a requirement of verifying an identity of an owner in payment scenarios having different security requirements, and implementing password-free payment for a transaction while improving security of the transaction.

Optionally, in an implementation of the third aspect, the method further includes: sending, by the server, a second list to the payment device according to the request message, where the second list includes a correspondence between a plurality of verification methods and a plurality of password-free limits, and the plurality of verification methods include the at least one verification method in the first list.

Optionally, in an implementation of the third aspect, the payment device includes a mobile phone, and the verification device includes a wearable device; or the payment device includes a wearable device, and the verification device includes a mobile phone.

According to a fourth aspect, a payment device is provided, where the payment device may perform an operation of the payment device in any one of the first aspect or the optional implementations of the first aspect. Specifically, the payment device may include a module/unit configured to perform the operation of the payment device in any one of the first aspect or the possible implementations of the first aspect.

According to a fifth aspect, a verification device is provided, where the verification device may perform an operation of the verification device in any one of the second aspect or the optional implementations of the second aspect. Specifically, the verification device may include a module/unit configured to perform the operation of the verification device in any one of the second aspect or the possible implementations of the second aspect.

According to a sixth aspect, a server is provided, where the server may perform an operation of the server in any one of the third aspect or the optional implementations of the third aspect. Specifically, the server may include a module/unit configured to perform the operation of the server in any one of the third aspect or the possible implementations of the third aspect.

According to a seventh aspect, a payment device is provided. The payment device includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored in the memory, the execution causes the payment device to perform the method in any one of the first aspect or the possible implementations of the first aspect, or the execution causes the payment device to implement the payment device provided in the fourth aspect.

According to an eighth aspect, a verification device is provided. The verification device includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored in the memory, the execution causes the verification device to perform the method in any one of the second aspect or the possible implementations of the second aspect, or the execution causes the verification device to implement the verification device provided in the fifth aspect.

According to a ninth aspect, a server is provided. The server includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored in the memory, the execution causes the server to perform the method in any one of the third aspect or the possible implementations of the third aspect, or the execution causes the server to implement the server provided in the sixth aspect.

According to a tenth aspect, a computer readable storage medium is provided, where the computer readable storage medium stores a program, and the program enables a payment device to perform the transaction method in any one of the first aspect or the implementations of the first aspect.

According to an eleventh aspect, a computer readable storage medium is provided, where the computer readable storage medium stores a program, and the program enables a verification device to perform the transaction method in any one of the second aspect or the implementations of the second aspect.

According to a twelfth aspect, a computer readable storage medium is provided, where the computer readable storage medium stores a program, and the program enables a server to perform the transaction method in any one of the third aspect or the implementations of the third aspect.

According to a thirteenth aspect, a system chip is provided. The system chip includes an input interface, an output interface, a processor, and a memory. The processor is configured to execute an instruction stored in the memory. When the instruction is executed, the processor may implement the method in any one of the first aspect or the implementations of the first aspect.

According to a fourteenth aspect, a system chip is provided. The system chip includes an input interface, an output interface, a processor, and a memory. The processor is configured to execute an instruction stored in the memory. When the instruction is executed, the processor may implement the method in any one of the second aspect or the implementations of the second aspect.

According to a fifteenth aspect, a system chip is provided. The system chip includes an input interface, an output interface, a processor, and a memory. The processor is configured to execute an instruction stored in the memory. When the instruction is executed, the processor may implement the method in any one of the third aspect or the implementations of the third aspect.

According to a sixteenth aspect, a transaction method is provided, including: determining, by a payment device, first information of the payment device, where the first information is used by the server to determine a current payment environment of the payment device; sending, by the payment device, the first information to the server, so that the server determines, based on the first information, a target verification method to be used by the verification device, where the target verification method is used to verify an identity of an owner of a payment account that is used to perform a current transaction in the payment device, the target verification method is a verification method that is in a plurality of verification methods and that is corresponding to the payment environment, there is a correspondence between the plurality of verification methods and a plurality of payment environments, and the payment device, the verification device, and the payment account have been associated with each other; receiving, by the payment device, third instruction information sent by the server according to the first information, where the third instruction information is used to instruct the verification device to verify the identity of the owner of the payment account by using the target verification method; and forwarding, by the payment device, the third instruction information to the verification device.

In this way, the server can determine, for the verification device based on the current payment environment and verification methods that are provided by the verification device and that have different security levels, verification methods that can meet different security requirements, to complete verification on the identity of the owner of the payment account.

Optionally, in an implementation of the sixteenth aspect, the first information includes at least one of the following: information about a geographical location of the payment device, a time period in which the payment device is currently located, and a device identity of a verification device associated with the payment device.

Optionally, in an implementation of the sixteenth aspect, the payment device includes a mobile phone, and the verification device includes a wearable device; or the payment device includes a wearable device, and the verification device includes a mobile phone.

According to a seventeenth aspect, a transaction method is provided, including: receiving, by a server, first information of a payment device that is sent by the payment device, where the first information is used by the server to determine a current payment environment of the payment device; determining, by the server, the payment environment of the payment device based on the first information, and determining, based on the payment environment and a correspondence between a plurality of payment environments and a plurality of verification methods, a target verification method to be used by the verification device, where the target verification method is used to verify an identity of an owner of a payment account that is used to perform a current transaction in the payment device, the target verification method is a verification method that is in the plurality of verification methods and that is corresponding to the payment environment, and the payment device, the verification device, and the payment account have been associated with each other; sending, by the server, third instruction information to the payment device, where the third instruction information is used to instruct the verification device to verify the identity of the owner of the payment account by using the target verification method; and receiving, by the server, a verification result sent by the payment device, where the verification result is a verification result obtained by the verification device by verifying the identity of the owner of the payment account by using the target verification method.

In this way, the server can determine, for the verification device based on the current payment environment and verification methods that are provided by the verification device and that have different security levels, verification methods that can meet different security requirements, to complete verification on the identity of the owner of the payment account.

The target verification method selected by the server for the verification device varies with the first information. For example, if the first information indicates that a time period in which the payment device is currently located is 11:00 to 12:00 at night, the server may determine, based on the first information, that the time period is a time in which a user usually performs a normal transaction and a risk is relatively low, to select a verification method with a relatively low security level for the verification device. If the first information indicates that a time period in which the payment device is currently located is 10:00 to 11:00 in the morning, the server may determine, based on the first information, that the time period does not meet a transaction habit of a user, to select a verification method with a relatively high security level for the verification device.

Optionally, in an implementation of the seventeenth aspect, the first information includes at least one of the following: information about a geographical location of the payment device, a time period in which the payment device is currently located, and a device identity of a verification device associated with the payment device.

Optionally, in an implementation of the seventeenth aspect, the payment device includes a mobile phone, and the verification device includes a wearable device; or the payment device includes a wearable device, and the verification device includes a mobile phone.

According to an eighteenth aspect, a payment device is provided, where the payment device may perform an operation of the payment device in any one of the sixteenth aspect or the optional implementations of the sixteenth aspect. Specifically, the payment device may include a module/unit configured to perform the operation of the payment device in any one of the sixteenth aspect or the possible implementations of the sixteenth aspect.

According to a nineteenth aspect, a server is provided, where the server may perform an operation of the server in any one of the seventeenth aspect or the optional implementations of the seventeenth aspect. Specifically, the server may include a module/unit configured to perform the operation of the server in any one of the seventeenth aspect or the possible implementations of the seventeenth aspect.

According to a twentieth aspect, a payment device is provided. The payment device includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored in the memory, the execution causes the payment device to perform the method in any one of the sixteenth aspect or the possible implementations of the sixteenth aspect, or the execution causes the payment device to implement the payment device provided in the eighteenth aspect.

According to a twenty-first aspect, a server is provided. The server includes a processor, a transceiver, and a memory. The processor, the transceiver, and the memory communicate with each other by using an inner connection path. The memory is configured to store an instruction. The processor is configured to execute the instruction stored in the memory. When the processor executes the instruction stored in the memory, the execution causes the server to perform the method in any one of the seventeenth aspect or the possible implementations of the seventeenth aspect, or the execution causes the server to implement the server provided in the nineteenth aspect.

According to a twenty-second aspect, a computer readable storage medium is provided, where the computer readable storage medium stores a program, and the program enables a payment device to perform the transaction method in any one of the sixteenth aspect or the implementations of the sixteenth aspect.

According to a twenty-third aspect, a computer readable storage medium is provided, where the computer readable storage medium stores a program, and the program enables a server to perform the transaction method in any one of the seventeenth aspect or the implementations of the seventeenth aspect.

According to a twenty-fourth aspect, a system chip is provided. The system chip includes an input interface, an output interface, a processor, and a memory. The processor is configured to execute an instruction stored in the memory. When the instruction is executed, the processor may implement the method in any one of the sixteenth aspect or the implementations of the sixteenth aspect.

According to a twenty-fifth aspect, a system chip is provided. The system chip includes an input interface, an output interface, a processor, and a memory. The processor is configured to execute an instruction stored in the memory. When the instruction is executed, the processor may implement the method in any one of the seventeenth aspect or the implementations of the seventeenth aspect.

### BRIEF DESCRIPTION OF DRAWINGS

FIG. 1 is a schematic structural diagram of a mobile phone for performing a transaction method according to an embodiment of this application;
FIG. 2 is a schematic diagram of a cardholder verification method CVM according to an embodiment of this application;
FIG. 3 is a schematic flowchart of a transaction method according to an embodiment of this application;
FIG. 4 is a schematic flowchart of a transaction method according to an embodiment of this application;
FIG. 5 is a schematic flowchart of a transaction method according to an embodiment of this application;
FIG. 6 is an interaction flowchart of a transaction method according to an embodiment of this application;
FIG. 7A and FIG. 7B are a schematic diagram of an interface of a transaction method according to an embodiment of this application;
FIG. 8 is an interaction flowchart of a transaction method according to an embodiment of this application;
FIG. 9A and FIG. 9B are a schematic diagram of an interface of a transaction method according to an embodiment of this application;
FIG. 10 is an interaction flowchart of a transaction method according to an embodiment of this application;
FIG. 11 is a schematic flowchart of a transaction method according to an embodiment of this application;
FIG. 12 is a schematic flowchart of a transaction method according to an embodiment of this application;
FIG. 13 is an interaction flowchart of a transaction method according to an embodiment of this application;
FIG. 14 is a schematic diagram of an interface of a transaction method according to an embodiment of this application;
FIG. 15 is a schematic block diagram of a payment device according to an embodiment of this application;
FIG. 16 is a schematic block diagram of a verification device according to an embodiment of this application;
FIG. 17 is a schematic block diagram of a server according to an embodiment of this application;
FIG. 18 is a schematic structural diagram of a payment device according to an embodiment of this application;
FIG. 19 is a schematic structural diagram of a verification device according to an embodiment of this application;
FIG. 20 is a schematic structural diagram of a server according to an embodiment of this application;
FIG. 21 is a schematic structural diagram of a system chip according to an embodiment of this application;
FIG. 22 is a schematic block diagram of a payment device according to another embodiment of this application;
FIG. 23 is a schematic block diagram of a server according to another embodiment of this application;
FIG. 24 is a schematic structural diagram of a payment device according to another embodiment of this application;
FIG. 25 is a schematic structural diagram of a server according to another embodiment of this application; and
FIG. 26 is a schematic structural diagram of a system chip according to another embodiment of this application.

### DESCRIPTION OF EMBODIMENTS

The following describes technical solutions of this application with reference to accompanying drawings.

The technical solutions of embodiments of this application may be applied to various terminal devices (also referred to as user equipment) that support distance measurement, for example, a mobile phone, a wristband, a tablet computer, a notebook computer, an ultra-mobile personal computer (Ultra-Mobile Personal Computer, UMPC), a personal digital assistant (Personal Digital Assistant, PDA) device, a handheld device with a wireless communication function, a computing device or another processing device connected to a wireless modem, an in-vehicle device, and a wearable device. The terminal device is not limited to a communications terminal.

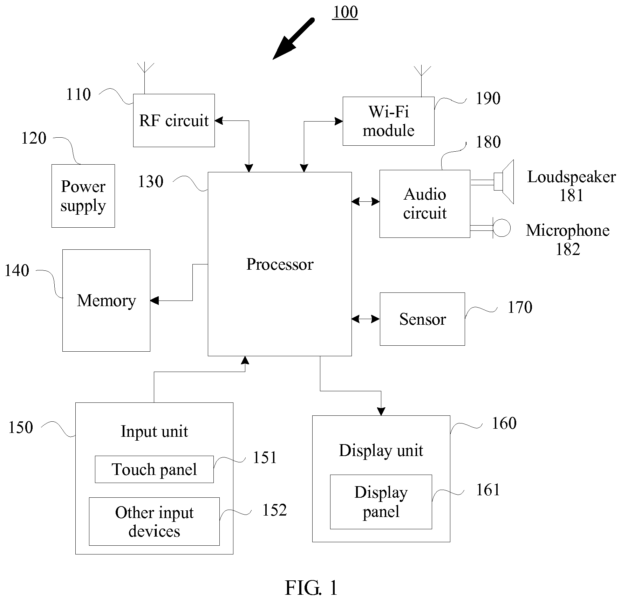

First, a mobile phone shown in FIG. 1 is used as an example to describe the terminal device to which an embodiment of this application is applicable. In this embodiment of this application, a mobile phone 100 may include components such as a radio frequency (Radio Frequency, RF) circuit 110, a power supply 120, a processor 130, a memory 140, an input unit 150, a display unit 160, a sensor 170, an audio circuit 180, and a Wireless Fidelity (wireless fidelity, Wi-Fi) module 190.

A person skilled in the art may understand that the structure of the mobile phone shown in FIG. 1 is only an example instead of a limitation, and the mobile phone may include more or fewer components than those shown in the figure, or combine some components, or have different component arrangements.

The RF circuit 110 may be configured to receive and send a signal in an information receiving/sending process or a call process. Particularly, after receiving downlink information from a base station, the RF circuit 110 sends the downlink information to the processor 130 for processing, and in addition, sends designed uplink data to the base station. Generally, the RF circuit includes but is not limited to an antenna, at least one amplifier, a transceiver, a coupler, a low noise amplifier (Low Noise Amplifier, LNA), and a duplexer. In addition, the RF circuit 110 may further communicate with a network and another device through wireless communication. Any communication standard or protocol may be used for the wireless communication, including but not limited to Global System for Mobile Communications (Global System of Mobile communication, GSM), general packet radio service (General Packet Radio Service, GPRS), Code Division Multiple Access (Code Division Multiple Access, CDMA), Wideband Code Division Multiple Access (Wideband Code Division Multiple Access, WCDMA), Long Term Evolution (Long Term Evolution, LTE), an email, and a short message service (Short Messaging Service, SMS).

The memory 140 may be configured to store a software program and a module. The processor 130 performs various function applications of the mobile phone 100 and data processing by running the software program and the module that are stored in the memory 140. The memory 140 may mainly include a program storage area and a data storage area. The program storage area may store an operating system, an application program required by at least one function (such as a sound playing function or an image playing function), and the like. The data storage area may store data (such as audio data or a phone book) created based on use of the mobile phone 100, and the like. In addition, the memory 140 may include a high-speed random access memory, and may further include a nonvolatile memory, for example, at least one magnetic disk storage device, a flash memory device, or another volatile solid-state storage device.

The input unit 150 may be configured to: receive entered digital or character information, and generate key signal input related to a user setting and function control of the mobile phone 100. Specifically, the input unit 150 may include a touch panel 151 and other input devices 152. The touch panel 151, also referred to as a touchscreen, may collect a touch operation (for example, an operation performed by a user on the touch panel 151 or near the touch panel 151 by using any proper object or accessory such as a finger or a stylus) performed by the user on or near the touch panel 151, and drive a corresponding connection apparatus based on a preset program. Optionally, the touch panel 151 may include two parts: a touch detection apparatus and a touch controller. The touch detection apparatus detects a touch position of the user, detects a signal brought by the touch operation, and transmits the signal to the touch controller. The touch controller receives touch information from the touch detection apparatus, converts the touch information into coordinates of a touch point, and sends the coordinates to the processor 130, and can receive and execute a command sent by the processor 130. In addition, the touch panel 151 may be implemented by using a plurality of types such as a resistive type, a capacitive type, an infrared ray, and a surface acoustic wave. In addition to the touch panel 151, the input unit 150 may include other input devices 152. Specifically, the other input devices 152 may include but are not limited to one or more of a physical keyboard, a function key (such as a volume control key or an on/off key), a trackball, a mouse, and a joystick.

The display unit 160 may be configured to display information entered by the user or information provided for the user, and various menus of the mobile phone 100. The display unit 160 may include a display panel 161. Optionally, the display panel 161 may be configured in a form of an LCD, an OLED, or the like. Further, the touch panel 151 may cover the display panel 161. After detecting a touch operation on or near the touch panel 151, the touch panel 151 transfers the touch operation to the processor 130 to determine a type of a touch event. Then, the processor 130 provides corresponding visual output on the display panel 161 based on the type of the touch event. In FIG. 1, the touch panel 151 and the display panel 151 are used as two independent components to implement input and input functions of the mobile phone 100. However, in some embodiments, the touch panel 151 and the display panel 161 may be integrated to implement the input and output functions of the mobile phone 100.

The mobile phone 100 may further include at least one sensor 170 such as a light sensor, a motion sensor, and another sensor. Specifically, the light sensor may include an ambient light sensor and a proximity sensor. The ambient light sensor may adjust luminance of the display panel 161 based on brightness of ambient light. The proximity sensor may turn off the display panel 161 and/or backlight when the mobile phone 100 moves to an ear. As a type of motion sensor, an accelerometer sensor may detect a value of acceleration in each direction (generally, three axes), may detect a value and a direction of gravity in a static state, and may be used in an application for recognizing a mobile phone posture (such as screen switching between a landscape mode and a portrait mode, a related game, or magnetometer posture calibration), a function related to vibration recognition (such as a pedometer or a knock), and the like. Other sensors such as a gyroscope, a barometer, a hygrometer, a thermometer, or an infrared sensor may be further disposed in the mobile phone 100. Details are not described herein.

The audio circuit 180, a loudspeaker 181, and a microphone 182 may provide an audio interface between the user and the mobile phone 100. The audio circuit 180 may convert received audio data into an electrical signal, and transmit the electrical signal to the loudspeaker 181. The loudspeaker 181 converts the electrical signal into a sound signal for output. In addition, the microphone 182 converts a collected sound signal into an electrical signal. The audio circuit 180 converts the electrical signal into audio data after receiving the electrical signal, and then outputs the audio data to the RF circuit 110 to send the audio data to, for example, another mobile phone, or outputs the audio data to the memory 140 for further processing.

Wi-Fi belongs to a short-distance wireless transmission technology. The mobile phone 100 may help, by using the Wi-Fi module 190, the user receive and send an email, browse a web page, access streaming media, and the like. The Wi-Fi module 170 provides wireless broadband Internet access for the user. Although FIG. 1 shows the Wi-Fi module 190, it may be understood that the Wi-Fi module is not a mandatory component of the mobile phone 100, and may be omitted as required without changing the essence of the present invention.

The processor 130 is a control center of the mobile phone 100, connects all parts of the entire mobile phone by using various interfaces and lines, and performs various functions of the mobile phone 100 and data processing by running or executing the software program and/or the module that are/is stored in the memory 140 and by invoking data stored in the memory 140, to implement a plurality of services that are based on the mobile phone. Optionally, the processor 130 may include one or more processing units. Preferably, an application processor and a modem processor may be integrated into the processor 130. The application processor mainly processes an operating system, a user interface, an application program, and the like. The modem processor mainly processes wireless communication. It may be understood that the modem processor may not be integrated into the processor 130.

The mobile phone 100 further includes the power supply 120 (such as a battery) that supplies power to each component. Preferably, the power supply may be logically connected to the processor 130 by using a power supply management system, to implement functions such as charging management, discharging management, and power consumption management by using the power supply management system. Although not shown, the mobile phone 100 may further include a camera, a Bluetooth module, and the like. Details are not described herein.

It should be noted that, the mobile phone shown in FIG. 1 is only an example of the terminal device. No limitation is particularly imposed in this embodiment of this application. This embodiment of this application may be applied to an electronic device such as a mobile phone or a tablet computer. No limitation is imposed herein.

For ease of understanding and remembering, the following uses the mobile phone 100 as an execution body of a transaction method in the embodiments of this application, to describe in detail the transaction method.

The following describes a related background technology of the embodiments of this application.

When a terminal device such as the mobile phone 100 in FIG. 1 performs a transaction, because a cardholder verification method (Cardholder Verification Method, CVM) list (CVM List) is preset in each of a card (such as a bank card or a credit card) used by a user and a point of sale (Point of Sale, POS) device (usually referred to as a POS terminal), when a transaction is performed, a verification process of verifying the card is as follows: A CVM list that is jointly supported by the card and the POS terminal is established based on the CVM list in each of the card and the POS terminal; a cardholder verification method with a highest priority is used based on priorities of various cardholder verification methods in the CVM list that is jointly supported by the card and the POS terminal; and cardholder verification is performed based on the selected verification method with the highest priority, and a related result is recorded.

For a physical card, a verification method in a CVM list generally includes at least an online PIN (namely, a password usually entered by a cardholder on the POS terminal) and a signature (namely, a manual signature of the cardholder). A priority of the online PIN is higher than a priority of the signature. It can be learned that a process of verifying the cardholder is performed on the POS terminal.

As a payment carrier is transitioned from the physical card to a mobile device, a particular CVM is currently proposed, namely, a consumer device cardholder verification method (Consumer Device CVM, CDCVM), and verification on an identity of a cardholder of a transaction card may be completed on a mobile phone by using a fingerprint or a digital password. Before communicating with a POS terminal, the mobile phone requests the cardholder to complete the verification on the identity of the cardholder on the mobile phone, and notifies the POS terminal of a verification result. Priorities of all verification methods are as follows: CDCVM>online PIN>signature.

With development of wearable devices, the wearable device gradually starts to be used as an auxiliary payment tool of the mobile phone. The wearable device is widely used in a transaction verification phase, and is used to verify an identity of an owner of a payment account bound to a payment device such as a mobile phone. Using the wearable device to verify the identity of the owner of the payment account has the following advantages: 1. The wearable device is lightweight and convenient, and can be worn by a user for a long time. 2. The user is more unaware of various verification methods (a biological signal and a digital signature/encryption) and the like of the wearable device, and the user does not need to actively perform an operation, so that experience is better. 3. As an additional entity, the wearable device is separated from the payment device such as a mobile phone, so that a transaction is verified by two devices (communication between the mobile phone and the wearable device is established based on a fact that a bound trusted wearable device is successfully detected), and is more secure.

The wearable device may provide different verification methods based on forms and functions. For example, a watch-type device and a wristband-type device may provide the following verification capabilities: 1. secure distance detection; 2. wearing status detection (the device is taken off the wrist or a buckle is unfastened); 3. preset secret information; 4. an encryption/decryption/signature operation; and 5. identity detection based on a physiological signal such as an electrocardiograph (Electrocardiograph, ECG) or a photoplethysmogram (Photoplethysmography, PPG). A verification method that may be provided by a glass-type device may include iris or skull acoustic wave reflection. These different verification methods have different security levels. For example, security levels herein may be determined based on information such as false rejection rates (False Reject Rate, FRR) and false acceptance rates (False Accept Rate, FAR) of different verification methods. The FRR and the FAR are corresponding to accuracy and reliability of a biological verification technology during comparison. For another example, there are also some other inherent characteristics that cause a security difference. For example, information such as the iris or the PPG is not easy to forge and is more unique, and therefore has a high security level. A human fingerprint may be changed, and therefore has a lower security level.

For example, Alipay launches a password-free function for a wearable device. For a smart device in a whitelist, after the smart device is bound to a mobile phone, the password-free function for an online transaction may be enabled, and a technical process is mainly as follows: The mobile phone is bound to the wearable device and the user applies for enabling the password-free function. During transaction, the mobile phone detects, based on a Bluetooth signal, whether the wearable device is within a secure distance. If the wearable device is not within the secure distance, the password-free function fails to be enabled. If it is detected that the bound wearable device is within the secure distance, the wearable device may verify an identity of a cardholder. For example, the wearable device may verify the identity of the cardholder through digital signature verification. To be specific, a server sends random data to the mobile phone, and the mobile phone forwards the random data to the wearable device for encryption. Then, the wearable device sends, by using the mobile phone, the encrypted data to the server for verification. After the verification performed by the server succeeds, the server authorizes the transaction, that is, successfully performs password-free authorization for the transaction. A characteristic that the wearable device can be worn by the user is used herein, and the wearable device is used as a representative of the identity of the cardholder. In addition, the wearable device is introduced as a second device to add additional verification. This is also a premise that the password-free function can be enabled.

For another example, when Apple Watch is used for payment, a digital password is used in combination with wearing status detection. A preset password is entered when the watch is worn for the first time. When it is detected that a buckle is unfastened (that is, the watch is not taken off), no password needs to be entered in a subsequent use process (no verification is performed on the watch, and whether a password needs to be entered on a POS terminal specifically depends on a case). This idea can also be used in a cardholder verification phase as a way of verifying an identity of a cardholder, so that the wearable device can be added to online and offline transactions as an auxiliary payment tool.

However, currently, that the wearable device performs payment verification is mainly implemented by each manufacturer by promoting private implementation. Usually, only one of a plurality of implementable consumer device cardholder verification methods is used, for example, communication distance detection or wearing status detection. In addition, only whether verification succeeds or not is determined, and respective features such as security levels of these verification methods are not considered in an actual implementation process.

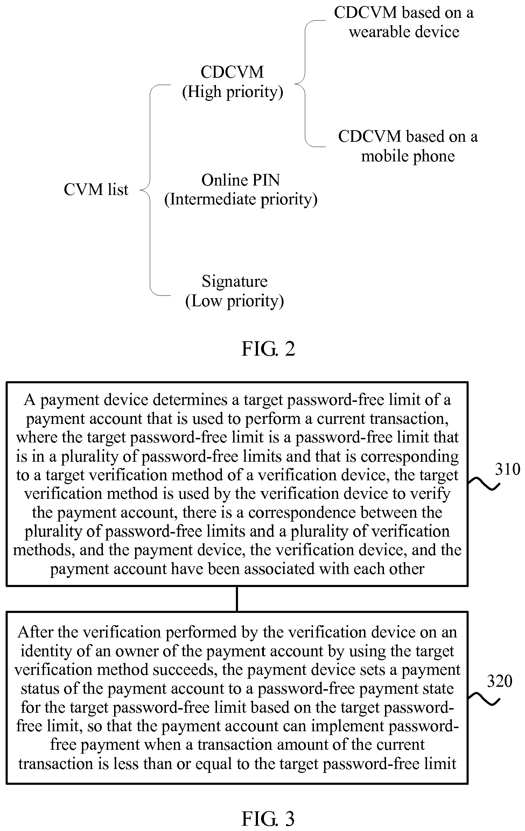

FIG. 2 is a schematic architectural diagram of a CVM according to an embodiment of this application. The CVM includes three verification methods: a consumer device cardholder verification method CDCVM, an online PIN, and a signature. The CDCVM includes a CDCVM based on a wearable device and a CDCVM based on a mobile phone. The CDCVM based on the wearable device is related to a type and a characteristic of the wearable device. For example, the CDCVM based on a watch-type or wristband-type device may include secure distance detection, wearing status detection (for example, the device is taken off the wrist or a buckle is unfastened), preset secret information, an encryption/decryption/signature operation, and the like. The CDCVM based on a glass-type device may include iris detection, skull acoustic wave reflection detection, and the like.

In this embodiment of this application, when the wearable device is used to assist a payment device in verifying an identity of an owner of a payment account, considering that different wearable devices may provide different consumer device cardholder verification methods and different verification methods have different security levels, a corresponding password-free limit may be set for each verification method. In this way, in a transaction process, a password-free limit of the payment account can be dynamically adjusted based on a verification method performed by the wearable device, and respective verification features of different verification methods are fully used to provide different levels of password-free capabilities, thereby meeting a requirement of verifying an identity of an owner in payment scenarios having different security requirements, and implementing password-free payment for a transaction while improving security of the transaction.

In this embodiment of this application, a consumer device cardholder verification method CDCVM of a verification device is also referred to as a "verification method" briefly.

The transaction method in the embodiments of this application is related to a payment device, a verification device, and a server. The payment device may be a mobile phone, and the verification device may be a wearable device. Alternatively, the payment device may be a wearable device, and the verification device may be a mobile phone. The server may be a host of a card issuing bank or a payment server of a non-bank payment organization. The wearable device may include but is not limited to a watch-type device worn on the wrist, such as a smartwatch or a smart band, a shoe-type device worn on the foot, such as smart sneakers, and a glass-type device worn on the head, such as smart glasses or a smart helmet. The payment device is not limited to a mobile phone either, provided that the payment device can complete a payment function. This is not limited in the embodiments of this application. For example, a cardholder may use a mobile phone as the payment device, and use a watch worn by the cardholder as the verification device. In addition, a transaction account in the embodiments of this application may be a card (namely, a bank account), or a payment account of the non-bank payment organization, such as a payment account that is of Alipay, WeChat, or the like and that can be used to perform a payment operation.

FIG. 3 is a schematic flowchart of a transaction method according to an embodiment of this application. The following describes the transaction method in this embodiment of this application with reference to FIG. 3. As shown in FIG. 3, the transaction method may be performed by a terminal device such as the mobile phone 100 shown in FIG. 1. The method specifically includes the following steps.

Step 310. A payment device determines a target password-free limit of a payment account that is used to perform a current transaction.

The target password-free limit is a password-free limit that is in a plurality of password-free limits and that is corresponding to a target verification method of a verification device. The target verification method is used by the verification device to verify an identity of an owner of the payment account (the verification performed by the verification device on the identity of the owner of the payment account is also referred to as "owner identity verification" or "identity verification" briefly in this embodiment of this application). There is a correspondence between the plurality of password-free limits and a plurality of verification methods. The payment device, the verification device, and the payment account have been associated with each other.

Optionally, the payment device may determine, by using the correspondence that is between the plurality of password-free limits and the plurality of verification methods and is stored in the payment device, the target password-free limit of the payment account that is used to perform the current transaction.

It should be understood that the correspondence between the plurality of password-free limits and the plurality of verification methods herein is determined based on a security level of each of the plurality of verification methods. A verification method with a higher security level is corresponding to a higher password-free limit. Therefore, respective verification features of different verification methods can be fully used to provide different levels of password-free capabilities, thereby meeting a requirement of verifying an identity of an owner of a payment account in payment scenarios having different security requirements.

Specifically, before performing payment, the payment device first determines the target password-free limit of the payment account that is used to perform the current transaction. The target password-free limit is a maximum transaction amount (or referred to as a consumption amount or a transaction limit) that is of a password-free transaction and that can be supported when the verification device verifies the identity of the owner of the payment account by using the target verification method. It should be understood that, the payment account in this embodiment of this application may be a payment card that is bound to a terminal device and that is used to directly perform payment, namely, a payment card (a bank card, a credit card, or the like) that is obtained by a user through application in a card issuing bank and that is loaded into a mobile device. Alternatively, the payment account may be a payment account of a non-bank payment organization in a terminal device, such as a payment account that is of Alipay, WeChat, or the like and that can be used to perform a payment operation. In a payment process, payment may be performed by using a balance in the payment account, or payment may be performed by using a bank card bound to the payment account.

The target password-free limit determined by the payment device is a password-free limit that is in a plurality of preset password-free limits and that is corresponding to the target verification method. The target verification method is a verification method used by the verification device such as a wearable device to verify the identity of the owner of the payment account. In this embodiment of this application, there is a correspondence between the plurality of password-free limits and a plurality of verification methods. A password-free limit supported by the payment device during payment varies with a verification method selected by the verification device to verify the payment account that is used to perform the current transaction. In this embodiment of this application, different password-free limits are set for different verification methods based on security levels of different verification methods. Therefore, respective verification features of different verification methods can be fully used to provide different levels of password-free capabilities, thereby meeting a requirement of verifying an identity of an owner of a payment account in payment scenarios having different security requirements, and implementing password-free payment for a transaction while improving security of the transaction.

For example, as shown in Table 1, if the verification device is glasses and a used verification method is iris verification, a password-free limit that is corresponding to the verification method and that is set by a server for the verification method based on a security level of the verification method may be 500. If the verification device is a wristband or a watch and a used verification method is vein verification, because the verification method has a relatively high security level, a relatively high password-free limit corresponding to the verification method may be set, for example, 2000. If the verification device is a mobile phone or a tablet computer and a used verification method is signature verification or encryption verification, a corresponding password-free limit that is set for the verification method based on a security level of the verification method may be 300. If the verification device is glasses, a wristband or a watch, or a mobile phone or a tablet computer, and a used verification method is secure distance verification, because secure distance verification has a relatively low security level, a relatively low password-free limit corresponding to the verification method may be set, for example, 50.

**Table 1**

| Verification device | Verification method | Password-free limit (yuan) |
|---|---|---|
| Glasses | Iris verification | 500 |
| | Secure distance verification | 50 |
| Wristband or watch | Vein verification | 2000 |
| | Secure distance verification | 50 |
| Mobile phone or tablet computer | Signature verification | 300 |
| | Secure distance verification | 50 |

It should be understood that, in step 310, there is a correspondence between the plurality of password-free limits and the plurality of verification methods, and each verification method has a verification method corresponding to the verification method. However, each verification device may support one verification method, or may support a plurality of verification methods, and different verification devices may support different verification methods, or may support a same verification method. No limitation is imposed herein.

In an embodiment, step 310 that a payment device determines a target password-free limit of a payment account that is used to perform a current transaction includes the following: The payment device sends first instruction information to the verification device, where the first instruction information is used to instruct the verification device to verify the payment account by using a verification method with a highest priority in a first list stored in the verification device, and the first list includes at least one verification method supported by the verification device; the payment device receives a verification result sent by the verification device according to the first instruction information, where the verification result includes an identifier used to indicate the verification method with the highest priority; and the payment device determines the verification method with the highest priority as the target verification method, and determines, based on the target verification method and a second list stored in the payment device, that the password-free limit corresponding to the target verification method is the target password-free limit.

The second list includes the correspondence between the plurality of verification methods and the plurality of password-free limits, and the plurality of verification methods include the at least one verification method in the first list.

Specifically, the payment device sends the first instruction information to the verification device, to instruct the verification device to verify the identity of the owner of the payment account by using the verification method with the highest priority in the first list stored in the verification device. The first list includes the at least one verification method supported by the verification device. The verification device searches the at least one verification device for the verification method with the highest priority based on priority information of the at least one verification device in the first list in the verification device, uses the verification method with the highest priority as the target verification method, and verifies the identity of the owner of the payment account by using the target verification method. The payment device does not know the verification method with the highest priority in the first list in the verification device. Therefore, when sending the verification result to the payment device, the verification device notifies the payment device of the verification method with the highest priority. The verification result that is sent by the verification device and is received by the payment device includes the identifier used to indicate the verification method with the highest priority. The payment device determines the verification method with the highest priority as the target verification method, and determines, based on the target verification method and the second list stored in the payment device, that the password-free limit corresponding to the target verification method is the target password-free limit.

It should be noted that the second list includes the correspondence between the plurality of verification methods and the plurality of password-free limits. The plurality of verification methods recorded in the second list may include a verification method supported by at least one verification device. This is equivalent to a list with a largest range. Certainly, the big list also includes the at least one verification method, in the first list, supported by the verification device that performs the current transaction.

The first list includes at least the at least one verification method supported by the verification device. The first list may include the at least one verification method supported by the verification device and priority information corresponding to the at least one verification method, for example, the first list is in a form: (method 1, priority 1), ..., (method X, priority X). Alternatively, the first list includes the at least one verification method supported by the verification device and at least one password-free limit corresponding to the at least one verification method, for example, the first list is in a form: (method 1, limit 1), ..., (method X, limit X). In this way, when the payment device does not store the second list, the verification device can determine the corresponding target password-free limit after determining the target verification method to be used by the verification device, to notify the payment device of the target password-free limit. Further, the first list may alternatively include all the at least one verification method supported by the verification device, priority information of the at least one verification method, and at least one password-free limit corresponding to the at least one verification method, for example, the first list is in a form: (method 1, priority 1, limit 1), ..., (method X, priority X, limit X).

The second list that may be stored in the payment device should include a plurality of verification methods and a password-free limit corresponding to each verification method. For example, the second list is in a form: (method 1, limit 1), (method 2, limit 2), ..., (method X, limit X), or the second is in a form: [device 1: (method 1, limit 1), device 2: (method 2, limit 2), ..., device X: (method X, limit X)...]. The plurality of verification methods include a verification method supported by at least one verification device. Certainly, the plurality of verification methods also include the at least one verification method supported by the verification device that participates in the current transaction.

The password-free limit corresponding to each verification method in the second list may be determined by the server based on a security level of each verification method. For example, a verification method with a higher security level is corresponding to a higher password-free limit, and a verification method with a lower security level is corresponding to a lower password-free limit.

A priority of each verification method in the at least one verification method in the first list is in direct proportion to a security level of the verification method, and a verification method with a higher security level has a higher priority. If the first list also includes a password-free limit corresponding to each verification method, the password-free limit corresponding to each verification method in the first list may also be determined by the server based on the security level of each verification method. In this case, a verification method with a higher security level has a higher priority and a higher password-free limit, that is, the verification method can support a higher limit of password-free payment.

This embodiment is implemented when the payment device stores the second list. If the payment device does not store the second list, the payment process may also be completed according to the following embodiment.

In an embodiment, step 310 that a payment device determines a target password-free limit of a payment account that is used to perform a current transaction includes the following:

The payment device sends first instruction information to the verification device, where the first instruction information is used to instruct the verification device to verify the identity of the owner of the payment account by using a verification method with a highest priority in a first list, and the first list includes at least one verification method supported by the verification device and at least one password-free limit corresponding to the at least one verification method; and
the payment device receives a verification result sent by the verification device according to the first instruction information, where the verification result includes the target password-free limit, and the target password-free limit is a password-free limit corresponding to the verification method with the highest priority.

Specifically, the payment device sends the first instruction information to the verification device, to instruct the verification device to verify the payment account by using the verification method with the highest priority in the first list stored in the verification device. The first list includes the at least one verification method supported by the verification device and the at least one password-free limit corresponding to the at least one verification method. The verification device searches the first list in the verification device for the verification method with the highest priority, and uses the verification method with the highest priority as the target verification method of the current transaction, to verify the identity of the owner of the account. Because the payment device does not store a second list, the payment device cannot determine a password-free limit based on a verification method. Therefore, the process of determining the password-free limit may be performed by the verification device. After the verification device searches the first list stored in the verification device for the verification method with the highest priority based on the first instruction information, the verification device further searches, based on the verification method with the highest priority, the first list for the password-free limit corresponding to the verification method with the highest priority, determines the password-free limit as the target password-free limit, and notifies the payment device of the target password-free limit when sending the verification result to the payment device. The verification result that is sent by the verification device and is received by the payment device includes the target password-free limit. The target password-free limit is the password-free limit corresponding to the verification method with the highest priority, namely, the target verification method.

Optionally, the password-free limit corresponding to the verification method with the highest priority may be a maximum password-free limit in the first list.

For example, the vein verification method corresponding to the watch or the wristband in Table 1 may be selected as the verification method with the highest priority, namely, the target verification method, to verify the identity of the owner of the payment account.

In an embodiment, step 310 that a payment device determines a target password-free limit of a payment account that is used to perform a current transaction includes the following: The payment device obtains transaction amount information of the transaction, where the transaction amount information includes the transaction amount of the transaction or an amount range of the transaction amount; and the payment device obtains, from the plurality of password-free limits based on the transaction amount information, the target password-free limit that matches the transaction amount information.

Specifically, the payment device may determine the target password-free limit by obtaining the transaction amount information. The amount information may be the specific transaction amount of the transaction, or may be the amount range of the transaction amount. The target password-free limit is a password-free limit that is in the plurality of password-free limits and that matches the transaction amount information. For example, a plurality of password-free limits in a second list include 50, 300, and 1000. If a current transaction amount is 6, the payment device or the verification device may select, as the target password-free limit, a password-free limit 50 that matches the current transaction amount. If a current transaction amount is 65, the payment device or the verification device may select, as the target password-free limit, a password-free limit 300 that matches the current transaction amount. For another example, password-free limits include 50, 300, and 1000. If an amount range of a current transaction amount is 0 to 50, the payment device or the verification device may select a password-free limit 50 as the target password-free limit. If an amount range of a current transaction amount is 50 to 300, the payment device or the verification device may select a password-free limit 300 as the target password-free limit. If an amount range of a current transaction amount is 300 to 1000, the payment device or the verification device may select a password-free limit 1000 as the target password-free limit.

Optionally, that the payment device obtains transaction amount information of the transaction includes the following: The payment device obtains the transaction amount information entered by a user on the payment device; or the payment device receives the transaction amount information sent by a server.

In the former manner of obtaining the transaction amount information, the user enters the transaction amount information on the payment device. That is, both the transaction amount and the amount range of the transaction amount are entered by the user. Certainly, the user may also tap a plurality of amount ranges presented on an interface of the payment device to select the amount range. This case can be mainly used for an offline transaction.

In the latter manner, after communicating with the transaction server, the payment device may obtain the transaction amount information from the transaction server. The transaction server such as a payment server of a non-bank payment organization or an online bank server of a card issuing bank indicates, to the payment device, transaction information including a current transaction amount, so that the payment device determines a matching target password-free limit. This case can be mainly used for an online transaction.

After obtaining the transaction amount information, the payment device may further obtain, in two manners from the plurality of password-free limits, the target password-free limit that matches the transaction amount information.

### Manner 1

That the payment device obtains, based on the transaction amount information, the target password-free limit that matches the transaction amount information includes the following:

The payment device sends the transaction amount information to the verification device, so that the verification device determines, from a first list stored in the verification device, the target password-free limit that matches the transaction amount, and determines, based on the target password-free limit and the first list, the target verification method corresponding to the target password-free limit; and the payment device receives a verification result sent by the verification device, where the verification result includes the target password-free limit.

Specifically, after obtaining the transaction amount information, the payment device sends the transaction amount information to the verification device, so that the verification device determines, from at least one password-free limit in the first list based on the transaction amount information, the target password-free limit that matches the transaction amount, and determines the corresponding target verification method based on the target password-free limit. The verification device verifies the identity of the owner of the payment account in the payment device based on the target verification method, and sends the verification result to the payment device. The payment device receives the verification result that is sent by the verification device and that indicates that the verification succeeds. The verification result includes the target password-free limit. In a process in which the payment device obtains the target password-free limit in Manner 1, the target verification method used by the verification device is determined by the verification device.

### Manner 2

That the payment device obtains, based on the transaction amount information, the target password-free limit that matches the transaction amount information includes the following: The payment device determines, based on the transaction amount information from a second list stored in the payment device, the target password-free limit that matches the transaction amount.

The method further includes the following: The payment device determines, based on the target password-free limit and the second list, the target verification method corresponding to the target password-free limit; and the payment device sends second instruction information to the verification device, where the second instruction information is used to instruct the verification device to verify the payment account by using the target verification method; or the payment device sends the target password-free limit to the verification device, so that the verification device determines, based on the target password-free limit, the target verification method corresponding to the target password-free limit, and verifies the identity of the owner of the payment account based on the target verification method.

Specifically, after obtaining the transaction amount information, the payment device determines, from a plurality of password-free limits in the second list, the target password-free limit that matches the transaction amount; determines, based on the target password-free limit and the second list, the target verification method corresponding to the target password-free limit; and sends the second instruction information to the verification device to instruct the verification device to verify the identity of the owner of the payment account by using the target verification method. In a process in which the payment device obtains the target password-free limit in Manner 2, the target verification method is determined by the payment device.

The foregoing describes a case in which the payment device is connected to only one associated verification device when the current transaction is performed. If the payment device is connected to a plurality of associated verification devices when the current transaction is performed, optionally, the verification device is a target verification device in the N verification devices, and N>1. Before the payment device determines the target password-free limit of the payment account that is used to perform the current transaction, the method further includes the following: The payment device determines the target verification device from the N verification devices.

Further, the target verification device is a verification device indicated by first input performed by the user on the payment device; or the target verification device is a verification device to which a verification method with a highest priority in N first lists in the N verification devices belongs; or the target verification device is a verification device to which a maximum password-free limit in the N first lists belongs.

Step 320. After verification performed by a verification device on an identity of an owner of the payment account by using the target verification method succeeds, the payment device sets a payment status of the payment account to a password-free payment state for the target password-free limit based on the target password-free limit, so that the payment account can implement password-free payment when a transaction amount of the current transaction is less than or equal to the target password-free limit.

Specifically, for an offline transaction, after the verification performed by the verification device succeeds, the verification device sends a verification result to the payment device. Because the payment device has determined the target password-free limit corresponding to the target verification method, after learning that the verification performed by the verification device on the identity of the owner of the payment account by using the target verification method succeeds, the payment device sets the payment status of the payment device to the password-free payment state for the target password-free limit based on the target password-free limit. For example, the payment device modifies a related parameter in a CVM list of the payment account or another possible password-free parameter, to modify the payment status to the password-free payment state for the target password-free limit. After the payment device communicates with a POS terminal, the POS terminal can obtain information (which carries information about the modified CVM list, and the information about the CVM list includes the target password-free limit) about the payment account, and performs determining based on the transaction amount and the target password-free limit. If the POS terminal determines that the transaction amount is less than or equal to the target password-free limit, the POS terminal directly submits the transaction information to a host of a card issuing bank to request transaction authorization, so that the payment device can perform a password-free payment operation, that is, no password needs to be entered on the POS terminal. If the POS terminal determines that the transaction amount is greater than the target password-free limit, a password needs to be entered to perform the transaction.

For an online transaction, after the payment device modifies the payment status of the payment device to the password-free payment state for the target password-free limit based on the target password-free limit, the payment device or a payment server may perform determining based on the transaction amount and the target password-free limit. If it is determined that the transaction can be performed without entering a password, the transaction is directly submitted. If the transaction cannot be performed without entering a password, the user is required to provide a payment password of the payment account.

In this embodiment of this application, the first list that is stored in the verification device and that is for the verification device and the second list that is stored in the payment device may be generated and delivered by the server. The server may determine a corresponding password-free limit for each verification method based on a security level of each verification method in the first list. In addition, in step 320, if the verification performed by the verification device by using the target verification method fails, the verification device may continue to perform verification by using a lower-level verification method or by using a verification method corresponding to a higher password-free limit, or a password needs to be entered to perform the transaction.

Optionally, before the payment device determines the target password-free limit of the payment account that is used to perform the current transaction, the method further includes the following: The payment device sends a request message to the server, where the request message is used to request to enable a function of using the verification device to verify the identity of the owner of the payment account; and the payment device receives the second list sent by the server according to the request message, where a password-free limit corresponding to each verification method in the second list is determined by the server based on a security level of each verification method.

Optionally, before the payment device determines the target password-free limit of the payment account that is used to perform the current transaction, the method further includes the following: The payment device receives device information sent by the verification device, where the device information includes the at least one verification method supported by the verification device, or may include a device identifier of the verification device; the payment device sends the request message to the server, where the request message includes the device information, and the request message is used to request to enable the function of using the verification device to verify the identity of the owner of the payment account; the payment device receives the first list sent by the server according to the device information, where the first list includes the at least one verification method that is verified by the server, or the first list includes the at least one verification method and the at least one password-free limit corresponding to the at least one verification method, and a password-free limit corresponding to each verification method in the first list is determined by the server based on a security level of each verification method; and the payment device sends the first list to the verification device.

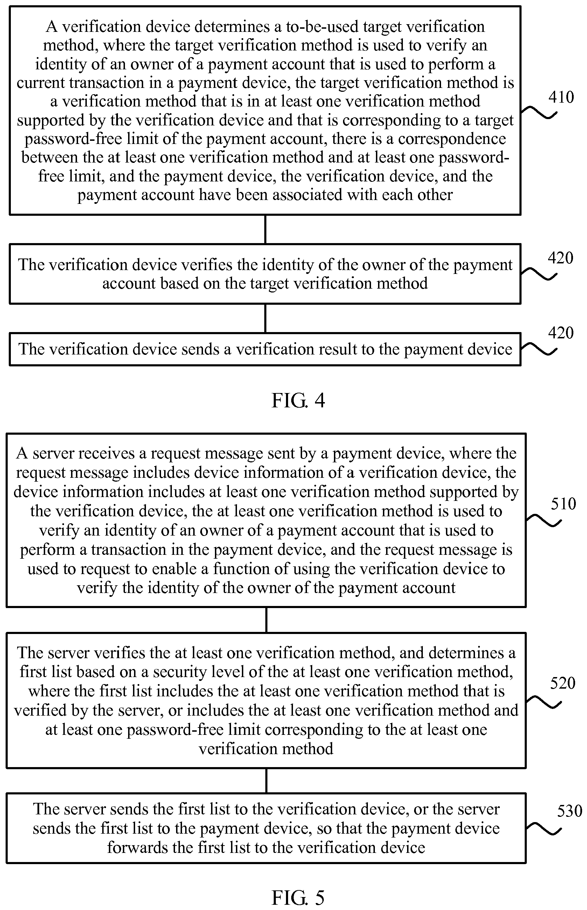

FIG. 4 is a schematic flowchart of a transaction method according to an embodiment of this application. The following describes the transaction method in this embodiment of this application with reference to FIG. 4. As shown in FIG. 4, the transaction method may be performed by a verification device such as a wearable device. The method specifically includes the following steps.

Step 410. The verification device determines a to-be-used target verification method.

The target verification method is used to verify an identity of an owner of a payment account that is used to perform a current transaction in a payment device. The target verification method is a verification method that is in at least one verification method supported by the verification device and that is corresponding to a target password-free limit of the payment account. There is a correspondence between the at least one verification method and at least one password-free limit. The payment device, the verification device, and the payment account have been associated with each other.

Optionally, the verification device may determine, by using the correspondence that is between the at least one verification method and the at least one password-free limit and is stored in the verification device, the target password-free limit of the payment account that is used to perform the current transaction. Alternatively, the verification device may determine, by using the at least one verification method stored in the verification device in combination with priority information of each verification method, the target password-free limit of the payment account that is used to perform the current transaction.

Specifically, when the verification device needs to verify the identity of the owner of the payment account that is used to perform the current transaction, the verification device needs to first determine a verification method to be used by the verification device. In this embodiment of this application, there is a correspondence between the at least one verification method and the at least one password-free limit. Therefore, a verification method that is selected by the verification device to verify the identity of the owner of the payment account that is used to perform the current transaction is associated with a password-free limit supported by the payment device during payment. Different verification methods have different security levels. In this way, in this embodiment of this application, different password-free limits are set for verification methods with different security levels. Therefore, respective verification features of different verification methods are fully used to provide different levels of password-free capabilities, thereby meeting a requirement of verifying an identity of an owner of a payment account in payment scenarios having different security requirements, and implementing password-free payment for a transaction while improving security of the transaction. For details, refer to descriptions of step 310 in FIG. 3. For brevity, details are not described herein again.

In an embodiment, step 410 that the verification device determines a to-be-used target verification method includes the following: The verification device receives first instruction information sent by the payment device, where the first instruction information is used to instruct the verification device to verify the identity of the owner of the payment account by using a verification method with a highest priority in a first list stored in the verification device, and the first list includes the at least one verification method supported by the verification device.

That the verification device verifies the identity of the owner of the payment account based on the target verification method includes the following: The verification device determines the verification method with the highest priority as the target verification method, and verifies the identity of the owner of the payment account based on the target verification method.

Specifically, the payment device sends the first instruction information to the verification device, to instruct the verification device to verify the payment account by using the verification method with the highest priority in the first list stored in the verification device. The first list includes the at least one verification method supported by the verification device. The verification device searches the first list in the verification device for the verification method with the highest priority based on the received first instruction information, determines the verification method with the highest priority as the target verification method, and verifies the identity of the owner of the payment account.

The method further includes the following: The verification device sends a verification result to the payment device according to the first instruction information, where the verification result includes an identifier used to indicate the verification method with the highest priority, so that the payment device determines the verification method with the highest priority as the target verification method, and determines, based on the target verification method and a second list stored in the payment device, that a password-free limit corresponding to the target verification method is the target password-free limit, where the second list includes a correspondence between a plurality of verification methods and a plurality of password-free limits, and the plurality of verification methods include the at least one verification method in the first list.

Specifically, the payment device does not know the verification method with the highest priority in the first list in the verification device. Therefore, when sending the verification result to the payment device, the verification device notifies the payment device of the verification method with the highest priority. The verification result that is sent by the verification device and is received by the payment device includes the identifier used to indicate the verification method with the highest priority. The payment device may determine, based on the verification method with the highest priority and the second list stored in the payment device, that a password-free limit corresponding to the verification method with the highest priority is the target password-free limit. The second list includes the correspondence between the plurality of verification methods and the plurality of password-free limits. The plurality of verification methods recorded in the second list may include a verification method supported by at least one verification device. This is equivalent to a big list. The big list also includes the at least one verification method, in the first list, supported by the verification device.

Alternatively, the method further includes the following: The verification device determines, based on the verification method with the highest priority and the first list, the target password-free limit corresponding to the verification method with the highest priority, where the first list further includes the at least one password-free limit corresponding to the at least one verification method; and the verification device sends a verification result to the payment device, where the verification result includes the target password-free limit.

Specifically, if the payment device does not store the second list, a process of determining a password-free limit may be performed by the verification device. After verifying the identity of the owner of the payment account by using the verification method with the highest priority in the first list based on the first instruction information, the verification device further searches, based on the verification method with the highest priority and the first list stored in the verification device, the first list for a password-free limit corresponding to the verification method with the highest priority; determines the password-free limit as the target password-free limit; and notifies the payment device of the target password-free limit when sending the verification result to the payment device. In this case, the verification result may also include an identifier of the target verification method. The verification result that is sent by the verification device and is received by the payment device includes the target password-free limit. The target password-free limit is the password-free limit corresponding to the verification method with the highest priority. Therefore, the payment device can also obtain the target password-free limit when storing no second list.

Optionally, the password-free limit corresponding to the verification method with the highest priority may be a maximum password-free limit in the first list.

In an embodiment, step 410 that the verification device determines a to-be-used target verification method includes the following: The verification device receives transaction amount information sent by the payment device, where the transaction amount information includes a transaction amount that is of the transaction and that is entered by a user on the payment device or an amount range of the transaction amount; the verification device determines, from the at least one password-free limit based on the transaction amount information, the target password-free limit that matches the transaction amount information; and the verification device determines, based on the target password-free limit and a first list stored in the verification device, the target verification method corresponding to the target password-free limit.

The method further includes the following: The verification device sends a verification result to the payment device, where the verification result includes the target password-free limit.

Specifically, the verification device may determine the target password-free limit by obtaining the transaction amount information. The user may enter the transaction amount information on the payment device, and the payment device forwards the transaction amount information to the verification device, so that the verification device further determines the target password-free limit and the target verification method based on the transaction amount information. The amount information may be the specific transaction amount of the transaction, or may be the transaction range of the transaction amount. The target password-free limit is a password-free limit that is in the at least one password-free limit in the first list and that matches the transaction amount information.

For example, a plurality of password-free limits include 50, 300, and 1000. If a current transaction amount is 6, the verification device may select, as the target password-free limit, a password-free limit 50 that matches the current transaction amount. If a current transaction amount is 65, the verification device may select, as the target password-free limit, a password-free limit 300 that matches the current transaction amount. For another example, a plurality of password-free limits include 50, 300, and 1000. If an amount range of a current transaction amount is 0 to 50, the verification device may select a password-free limit 50 as the target password-free limit. If an amount range of a current transaction amount is 50 to 300, and the current transaction amount does not fall within the range, it indicates that a verification capability of the verification device cannot implement password-free payment of the current transaction. Therefore, failure information is returned to the user, to enable the user to provide a payment password or another verification method to prove an identity.

After determining, from the at least one password-free limit based on the transaction amount information, the target password-free limit that matches the transaction amount, the verification device may determine, based on the target password-free limit and the first list stored in the verification device, the target verification method corresponding to the target password-free limit, to verify the identity of the owner of the payment account based on the target verification method, and send the verification result to the payment device. The verification result that is sent by the verification device and is received by the payment device includes the target password-free limit. Alternatively, the verification result that is sent by the verification device and is received by the payment device may not include the target password-free limit, but includes an identifier used to indicate the target verification method, so that the payment device determines, based on the target verification method and a stored second list, the target password-free limit corresponding to the target verification method.

In an embodiment, step 410 that the verification device determines a to-be-used target verification method includes the following: The verification device receives second instruction information sent by the payment device, where the second instruction information is used to instruct the verification device to verify the identity of the owner of the payment account by using the target verification method, the target verification method is determined by the payment device based on the target password-free limit and a second list stored in the payment device, and the target password-free limit is determined by the payment device based on transaction amount information entered by a user, or is determined by the payment device based on transaction amount information obtained from a server.

Specifically, after obtaining the transaction amount information, the payment device determines, from a plurality of password-free limits, the target password-free limit that matches the transaction amount; determines, based on the target password-free limit and the second list stored in the payment device, the target verification method corresponding to the target password-free limit; and sends the second instruction information to the verification device to instruct the verification device to verify the identity of the owner of the payment account by using the target verification method. After receiving the second instruction information, the verification device directly verifies the identity of the owner of the payment account based on the target verification method.

In an embodiment, step 410 that the verification device determines a to-be-used target verification method includes the following: The verification device receives the target password-free limit sent by the payment device, where the target password-free limit is determined by the payment device based on transaction amount information entered by a user, or is determined by the payment device based on transaction amount information obtained from a server; and the verification device determines, based on the target password-free limit and a first list stored in the verification device, the target verification method corresponding to the target password-free limit.

Specifically, after obtaining the transaction amount information, the payment device determines, from a plurality of password-free limits, the target password-free limit that matches the transaction amount, and sends the target password-free limit to the verification device. In this way, the verification device determines, based on the target verification method and the first list stored in the verification device, the to-be-used target verification method corresponding to the target password-free limit. The first list includes the at least one verification method supported by the verification device and the at least one password-free limit corresponding to the at least one verification method.

Step 420. The verification device verifies an identity of an owner of the payment account based on the target verification method.

Specifically, the verification device verifies, based on the target verification method determined in step 410, the identity of the owner of the payment account that is used to perform the current transaction, for example, verifies an identity of a cardholder of a transaction card.

Step 430. The verification device sends a verification result to a payment device.

In this embodiment of this application, the first list that is stored in the verification device and that is for the verification device may be generated and delivered by the server.

Optionally, before the verification device determines the to-be-used target verification method, the method further includes the following: The verification device sends device information of the verification device to the payment device, so that the payment device forwards the device information to the server, where the device information includes the at least one verification method supported by the verification device, or may include a device identifier of the verification device; and
the verification device receives the first list that is generated by the server and is forwarded by the payment device, or directly receives the first list sent by the server, where the first list is determined by the server based on a security level of the at least one verification method.

FIG. 5 is a schematic flowchart of a transaction method according to an embodiment of this application. The following describes the transaction method in this embodiment of this application with reference to FIG. 5. As shown in FIG. 5, the transaction method may be performed by a server such as a host of a card issuing bank or a payment server of a non-bank payment organization. The method specifically includes the following steps.

Step 510. The server receives a request message sent by a payment device, where the request message includes device information of a verification device, the device information includes at least one verification method supported by the verification device, the at least one verification method is used to verify an identity of an owner of a payment account that is used to perform a transaction in the payment device, and the request message is used to request to enable a function of using the verification device to verify the identity of the owner of the payment account.

Step 520. The server verifies the at least one verification method, and determines a first list based on a security level of the at least one verification method, where the first list includes the at least one verification method that is verified by the server, or includes the at least one verification method and at least one password-free limit corresponding to the at least one verification method.

Step 530. The server sends the first list to the verification device, or the server sends the first list to the payment device, so that the payment device forwards the first list to the verification device.

Specifically, when the verification device is bound to the payment device, the verification device provides the device information of the verification device for the payment device. The device information includes the at least one verification method supported by the verification device, or may include a device identifier of the verification device. The at least one verification method is used to verify the identity of the owner of the payment account that is used to perform the transaction in the payment device. The payment device forwards, to the server, the device information carried in the request information, so that the server generates, for the verification device based on the device information, the first list that belongs to the verification device.

After receiving the device information of the verification device, the server verifies the at least one verification method supported by the verification device, and determines the first list based on the security level or a reliability level of the at least one verification method. The first list includes the at least one verification method that is verified by the server and the at least one password-free limit corresponding to the at least one verification method. For example, for a verification method with a high security level or good reliability, the server may set a relatively high password-free limit; and for a verification method with a low security level or poor reliability, the server may set a relatively low password-free limit.

After generating the first list, the server sends the first list to the payment device, and the payment device forwards the first list to the verification device. Alternatively, if the verification device can directly communicate with the server, for example, a corresponding client is installed on the verification device to enable the verification device to communicate with the server, the server may directly deliver the first list to the verification device.

Optionally, the method further includes the following: The server sends a second list to the payment device according to the request message.

The second list includes a correspondence between a plurality of verification methods and a plurality of password-free limits, and the plurality of verification methods include the at least one verification method in the first list.

To be specific, the server delivers, to the verification device, the first list that should be stored in the verification device, and also delivers, to the payment device, the second list that should be stored in the payment device, so that the verification device and the payment device determine a target verification method and/or a target password-free limit in a subsequent transaction process.

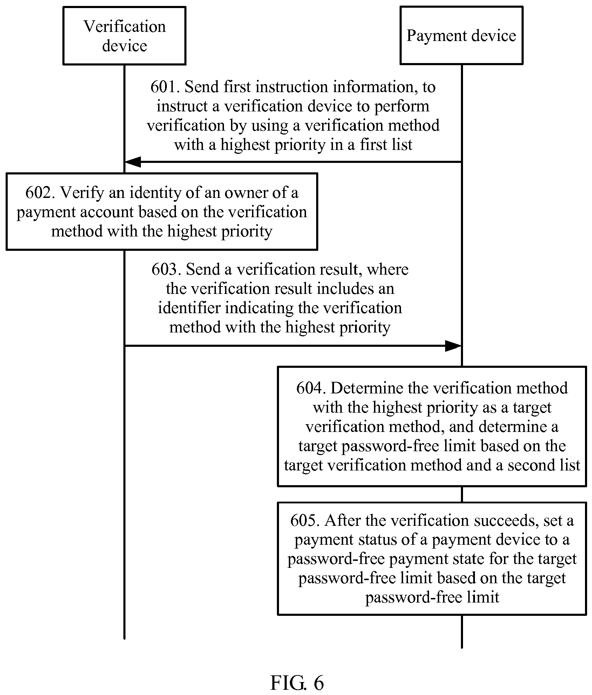

With reference to FIG. 6 to FIG. 9B, the following uses two detailed examples to describe the transaction method in the embodiments of this application.

FIG. 6 is an interaction flowchart of a transaction method according to an embodiment of this application. FIG. 6 shows a verification device, a payment device, and a server. As shown in FIG. 6, the transaction method is specifically as follows:

Step 601. The payment device sends first instruction information to the verification device, where the first instruction information is used to instruct the verification device to verify an identity of an owner of the payment account by using a verification method with a highest priority in a first list stored in the verification device.

The first list includes at least one verification method supported by the verification device.

Step 602. The verification device verifies the identity of the owner of the payment account based on the verification method with the highest priority.

Step 603. The verification device sends a verification result to the payment device according to the first instruction information.

The verification result includes an identifier used to indicate the verification method with the highest priority.

Step 604. The payment device determines the verification method with the highest priority as a target verification method, and determines, based on the target verification method and a second list stored in the payment device, that a password-free limit corresponding to the target verification method is the target password-free limit.

Step 605. After the verification succeeds, the payment device sets a payment status of the payment account to a password-free payment state for the target password-free limit based on the target password-free limit, so that the payment account can implement password-free payment when a transaction amount of a current transaction is less than or equal to the target password-free limit.

The second list includes a correspondence between the plurality of verification methods and the plurality of password-free limits, and the plurality of verification methods include the at least one verification method in the first list.

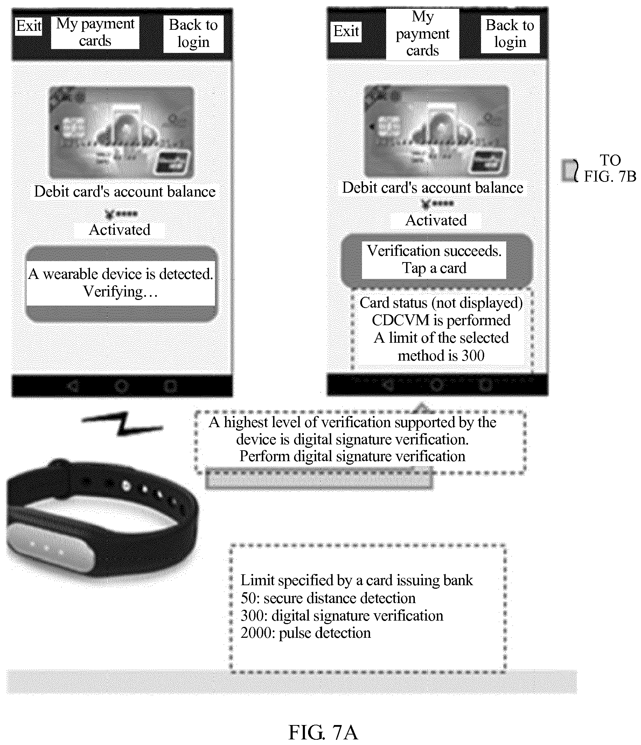

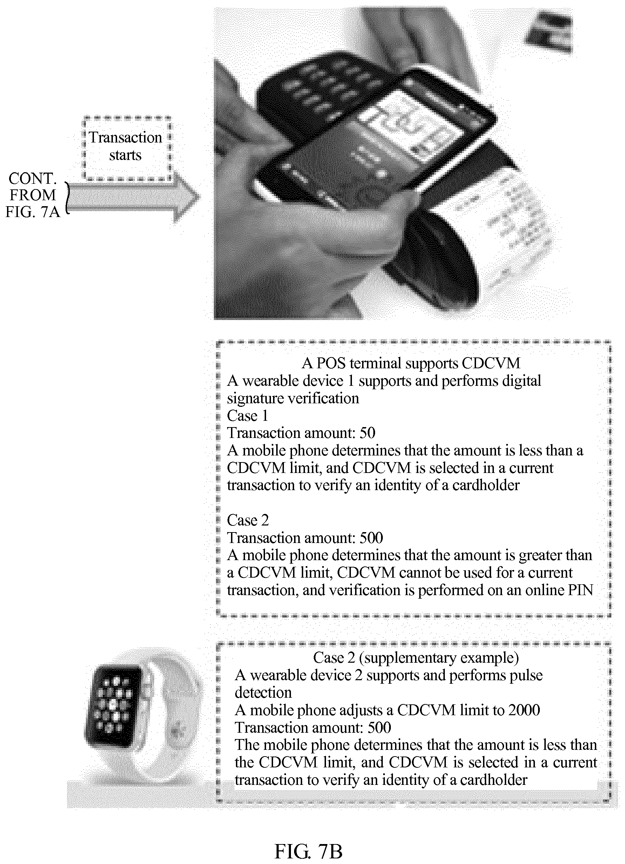

In step 601 to step 605, it is assumed that the second list stored in the payment device includes three verification methods: secure distance detection, digital signature verification, and pulse detection, and password-free limits corresponding to the three verification methods are respectively 50, 300, and 2000. It is assumed that a verification method with a highest priority in the three verification methods is digital signature verification. A highest level of verification supported by a wristband with a relatively weak function is digital signature verification. After a verification function is applied for and is enabled for the wristband, a first list delivered by the server to the wristband includes only secure distance detection, digital signature verification, and limits respectively corresponding to the two verification methods. A watch with a powerful function may support pulse detection, and a first list of the watch includes pulse verification and a password-free limit corresponding to pulse verification. FIG. 7A and FIG. 7B are a schematic diagram of an interface of a transaction method according to an embodiment of this application. If a mobile phone is separately bound to two devices: a wristband and a watch, a password-free limit of a card is dynamically adjusted for a verification method that is performed by a wearable device and is used in each time of transaction. When the watch is used to verify an identity, password-free payment may be implemented for a transaction whose amount is below 2000. However, for the wristband, password-free payment may be implemented only for a transaction whose amount is below 300. A verification method with a higher security level has a higher priority, and is corresponding to a higher password-free limit.

A user is unaware of an entire verification process performed based on the wearable device and an interaction process between the mobile phone and the wearable device, and the user does not need to actively perform an operation, so that user experience is better. In addition to the wristband and the watch that are used examples herein, another device with a powerful verification function may further provide an identity verification function for a transaction having a higher security level requirement, to implement a password-free transaction.

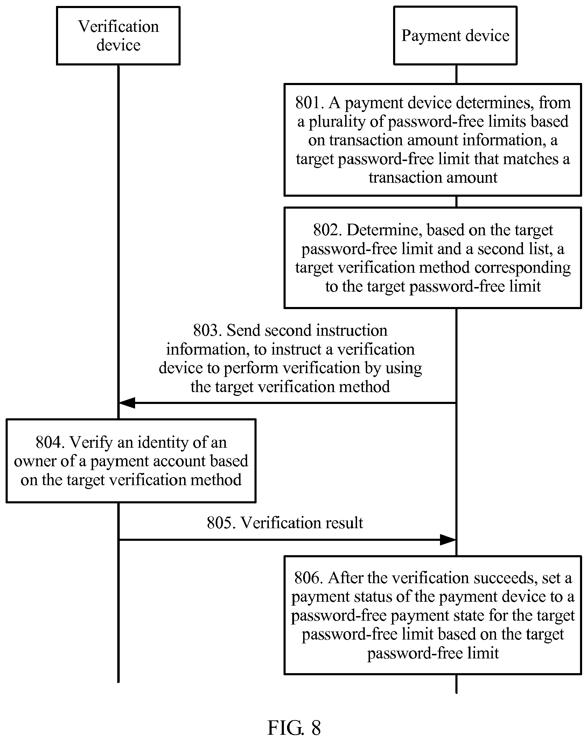

FIG. 8 is an interaction flowchart of a transaction method according to an embodiment of this application. FIG. 8 shows a verification device, a payment device, and a server. As shown in FIG. 8, the transaction method is specifically as follows:
Step 801. The payment device determines, from the plurality of password-free limits based on the transaction amount information, the target password-free limit that matches the transaction amount.
Step 802. The payment device determines, based on the target password-free limit and a second list stored in the payment device, the target verification method corresponding to the target password-free limit.
   The second list includes a correspondence between the plurality of verification methods and the plurality of password-free limits, and the plurality of verification methods include the at least one verification method in the first list.
Step 803. The payment device sends second instruction information to the verification device, where the second instruction information is used to instruct the verification device to verify the payment account by using the target verification method.
Step 804. The verification device verifies an identity of an owner of the payment account based on the target verification method.
Step 805. The verification device sends a verification result to the payment device.
Step 806. After determining that the verification succeeds, the payment device sets a payment status of the payment device to a password-free payment state for the target password-free limit based on the target password-free limit, so that the payment device can implement password-free payment when a transaction amount of a current transaction is less than or equal to the target password-free limit.

For a specific process of the password-free payment operation performed by the payment device, refer to descriptions of step 320.

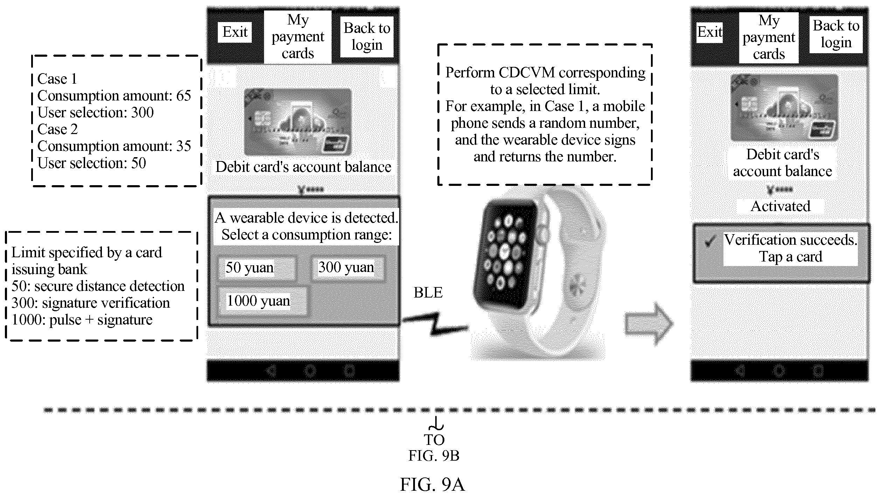

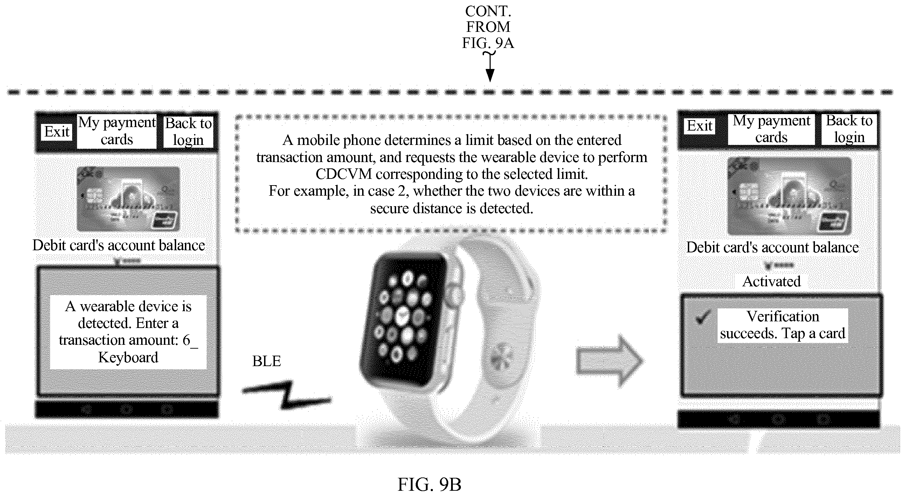

In step 801 to step 806, it is assumed that a second list stored in a mobile phone includes three verification methods: secure distance detection, digital signature verification, and pulse detection, and password-free limits corresponding to the three verification methods are respectively 50, 300, and 2000. FIG. 9A and FIG. 9B are a schematic diagram of an interface of a transaction method according to an embodiment of this application. If a consumption amount of a user is 65, a matching target password-free limit that may be selected by the user on the mobile phone is 300. If a consumption amount of a user is 35, a target password-free limit that may be selected by the user on the mobile phone is 50. In this way, the mobile phone determines a corresponding target verification method based on the password-free limit entered by the user and the second list stored in the mobile phone, and instructs a verification device such as a watch shown herein to verify an identity by using the target verification method. If the user directly enters a consumption amount such as 6 yuan, the mobile phone determines, based on the transaction amount entered by the user, that a target password-free limit is 50, and requests the wearable device to perform a verification method corresponding to the target password-free limit 50, that is, perform secure distance detection. Therefore, the watch starts secure distance detection to verify an identity of a cardholder of a current transaction. That is, if the two devices are within a secure distance, it is considered that the transaction is initiated by an owner of a payment account, to complete a process of verifying the identity. If the verification succeeds, the mobile phone performs payment through card tapping and starts to perform a transaction. A POS terminal submits transaction information and the like to a server such as a host of a card issuing bank. The host of the card issuing bank verifies whether the transaction information is tampered with, whether a balance is sufficient, and the like. After the verification performed by the host of the card issuing bank succeeds, payment succeeds and the transaction is completed, so that the user does not need to enter a password in an entire transaction process.

Based on the foregoing descriptions, before a transaction is performed, the server delivers, to the verification device, a first list that should be stored in the verification device, and the server delivers a second list of the payment device to the payment device. The first list includes at least one verification method supported by the verification device and at least one password-free limit corresponding to the at least one verification method. The second list includes a correspondence between a plurality of verification methods and a plurality of password-free limits. The plurality of verification methods recorded in the second list may include a verification method supported by at least one verification device. This is equivalent to a big list. The big list also includes the at least one verification method, in the first list, supported by the verification device.

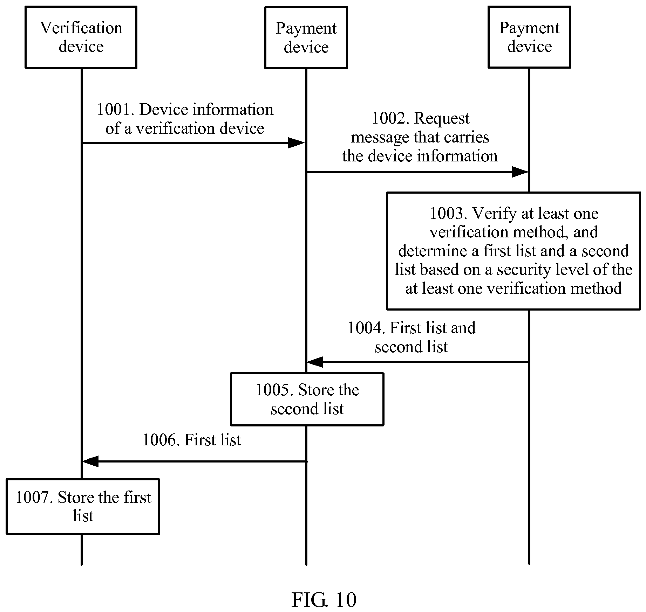

FIG. 10 is used as an example to describe, by using a detailed embodiment, a process of obtaining a first list and a second list. FIG. 10 is an interaction flowchart of a transaction method according to an embodiment of this application. FIG. 10 shows a verification device, a payment device, and a server. As shown in FIG. 10, the transaction method is specifically as follows:
Step 1001. The verification device sends device information of the verification device to the payment device.
   The device information includes at least one verification method supported by the verification device, or may include a device identifier of the verification device.
Step 1002. The payment device sends the request message to the server, where the request information includes the device information of the verification device, and the request message is used to request to enable a function of using the verification device to verify an identity of an owner of a payment account that is used to perform a current transaction.
Step 1003. The server verifies the at least one verification method, and determines a first list based on a security level of the at least one verification method.
   The first list includes the at least one verification method that is verified by the server and at least one password-free limit corresponding to the at least one verification method. A password-free limit corresponding to each verification method in the first list is determined by the server based on a security level of each verification method.
Step 1004. The server sends the first list and a second list to the payment device.
   The second list includes a correspondence between a plurality of verification methods and a plurality of password-free limits, and the plurality of verification methods include the at least one verification method in the first list. A password-free limit corresponding to each verification method in the second list is determined by the server based on a security level of each verification method.
Step 1005. The payment device stores the second list.
Step 1006. The payment device sends the first list to the verification device.
Step 1007. The verification device stores the first list.

After storing the respective lists, the payment device and the verification device may determine, in a subsequent transaction process, a verification method and/or a password-free limit by using the lists respectively stored in the payment device and the verification device.

It should be understood that the transaction method described above may be used for both an offline transaction and an online transaction. No limitation is imposed in this embodiment of this application. During offline transaction, the payment device sets, based on a target password-free limit determined by the payment device, a payment status to a password-free payment state corresponding to the target password-free limit, so that the payment device can implement password-free payment when a POS terminal determines that a transaction amount is less than or equal to the target password-free limit.

During online payment, after the payment device modifies, based on a target password-free limit determined by the payment device, a payment status to a password-free payment state corresponding to the target password-free limit, the payment device performs password-free payment when determining that a transaction amount obtained from the server is less than or equal to the target password-free limit. Alternatively, the server may determine whether a transaction amount is less than or equal to the target password-free limit, and the payment device can implement password-free payment when the transaction amount is less than or equal to the target password-free limit.

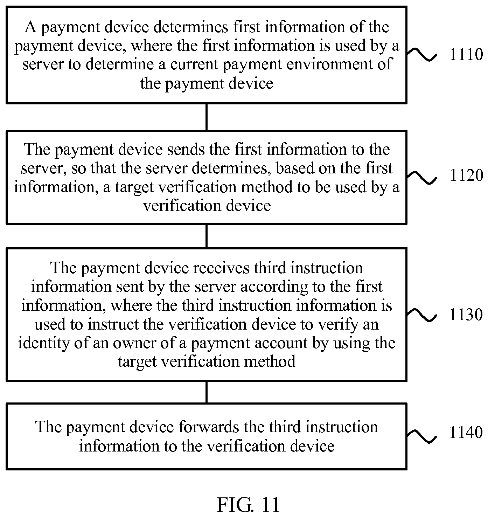

The embodiments of this application further provide a transaction method that is based on an online transaction. A server performs determining based on a factor such as a current payment environment, to select an appropriate verification method from at least one verification method for a verification device. Because different verification methods have security levels or reliability levels, a transaction security requirement of the server in different payment environments can be met. With reference to FIG. 11 to FIG. 14, the following describes in detail the transaction method that is based on an online transaction in the embodiments of this application.

FIG. 11 is a schematic flowchart of a transaction method according to an embodiment of this application. The method shown in FIG. 11 is performed by a payment device such as the mobile phone 100 in FIG. 1. The method is based on an online transaction and specifically includes the following steps.

Step 1110. The payment device determines first information of the payment device.

The first information is used by a server to determine a current payment environment of the payment device.

Optionally, the first information includes at least one of the following: information about a geographical location of the payment device, a time period in which the payment device is currently located, and a device identity of a verification device associated with the payment device.

Herein, the device identity of the verification device is a device type of the verification device, such as a watch, a wristband, or glasses.

Step 1120. The payment device sends the first information to a server, so that the server determines, based on the first information, a target verification method to be used by a verification device.

The target verification method is used to verify an identity of an owner of a payment account that is used to perform a current transaction in the payment device. The target verification method is a verification method that is in a plurality of verification methods and that is corresponding to the payment environment. There is a correspondence between the plurality of verification methods and a plurality of payment environments. The payment device, the verification device, and the payment account have been associated with each other.

Specifically, the information about the payment environment is used by the server to determine the payment environment in which the payment device performs the current transaction and further determine the target verification method of the current transaction based on the payment environment of the current transaction and a corresponding risk management policy.

Step 1130. The payment device receives third instruction information sent by the server according to the first information, where the third instruction information is used to instruct the verification device to verify an identity of an owner of the payment account by using the target verification method.

Step 1140. The payment device forwards the third instruction information to the verification device.

Specifically, the payment device determines the first information of the payment device, for example, the current geographical location of the payment device (for example, at home or in a public place), the time period in which the payment device is currently located in a payment-pending state, and the device identity of the verification device associated with the payment device. The payment device sends the first information to the server, so that the server selects, based on the first information, an appropriate target verification method corresponding to the first information, and delivers the target verification method to the verification device. In this way, the verification device verifies, by using the target verification method, the identity of the owner of the payment account that is used to perform the current transaction.

The target verification method selected by the server for the verification device varies with the first information. For example, if the first information indicates that the current environment of the payment device is a home, the server may select a verification method with a relatively low security level. If the first information indicates that the current environment of the payment device is a public place, the server needs to select a verification method with a relatively high security level, to ensure transaction reliability in a public environment.

In this way, the server can determine, for the verification device based on the current payment environment and verification methods that are provided by the verification device and that have different security levels, verification methods that can meet different security requirements, to complete verification on the identity of the owner of the payment account and further implement password-free payment.

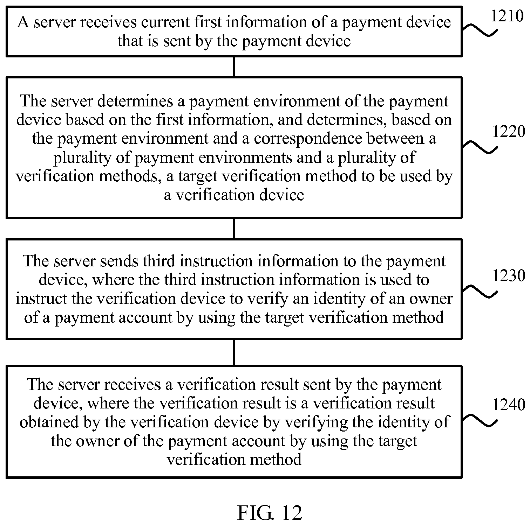

FIG. 12 is a schematic flowchart of a transaction method according to an embodiment of this application. The following describes the transaction method in this embodiment of this application with reference to FIG. 12. As shown in FIG. 12, the transaction method may be performed by a server such as a host of a card issuing bank or a payment server of a non-bank payment organization. The method specifically includes the following steps.

Step 1210. The server receives current first information of a payment device that is sent by the payment device.

The first information is used by the server to determine a current payment environment of the payment device.

Optionally, the first information may include at least one of the following: information about a geographical location of the payment device, a time period in which the payment device is currently located, and a device identity of a verification device associated with the payment device. The device identity of the verification device may be, for example, a device type of the verification device, such as a watch, a wristband, or glasses.

Step 1220. The server determines a payment environment of the payment device based on the first information, and determines, based on the payment environment and a correspondence between a plurality of payment environments and a plurality of verification methods, a target verification method to be used by a verification device.

The target verification method is used to verify an identity of an owner of a payment account that is used to perform a current transaction in the payment device. The target verification method is a verification method that is in the plurality of verification methods and that is corresponding to the payment environment. The payment device, the verification device, and the payment account have been associated with each other.

Step 1230. The server sends third instruction information to the payment device, where the third instruction information is used to instruct the verification device to verify an identity of an owner of the payment account by using the target verification method.

Step 1240. The server receives a verification result sent by the payment device, where the verification result is a verification result obtained by the verification device by verifying the identity of the owner of the payment account by using the target verification method.

Specifically, the server receives the first information of the payment device that is sent by the payment device, for example, the current geographical location of the payment device (for example, at home or in a public place), the time period in which the payment device is currently located in a payment-pending state, and the device identity of the verification device associated with the payment device. The server selects, based on the first information, an appropriate target verification method corresponding to the payment environment, and sends the third instruction information to the payment device, so that the payment device forwards the third instruction information to the verification device. Alternatively, the server directly sends the third instruction information to the verification device, and the third instruction information instructs the verification device to verify the identity of the owner of the payment account by using the target verification method, so that the verification device verifies, by using the target verification method, the identity of the owner of the payment account that is used to perform the current transaction.

The target verification method selected by the server for the verification device varies with the first information. For example, if the first information indicates that the time period in which the payment device is currently located is 11:00 to 12:00 at night, the server may determine, based on the first information, that the time period is a time in which a user usually performs a normal transaction and a risk is relatively low, to select a verification method with a relatively low security level for the verification device. If the first information indicates that the time period in which the payment device is currently located is 10:00 to 11:00 in the morning, the server may determine, based on the first information, that the time period does not meet a transaction habit of a user, to select a verification method with a relatively high security level for the verification device.

In this way, the server can determine, for the verification device based on the current payment environment and verification methods that are provided by the verification device and that have different security levels, verification methods that can meet different security requirements, to complete verification on the identity of the owner of the payment account.

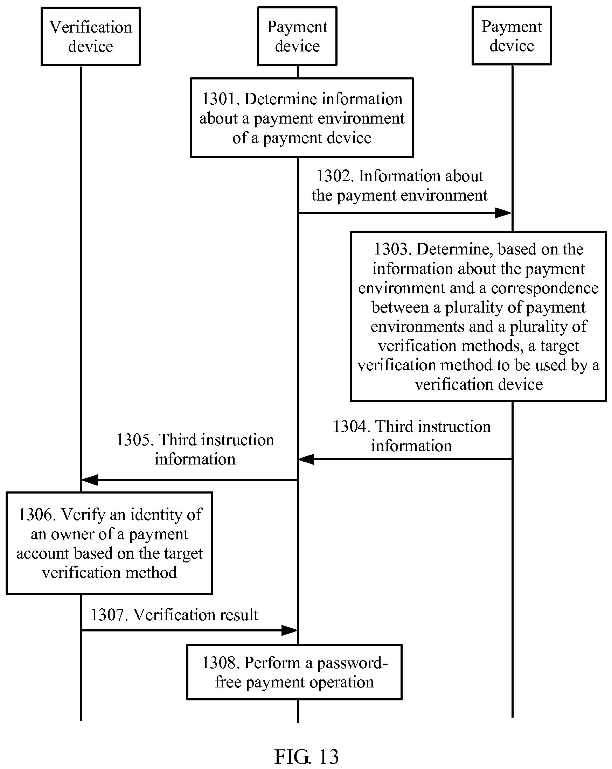

With reference to FIG. 13, the following uses a detailed example to describe the transaction method in the embodiments of this application.

FIG. 13 is an interaction flowchart of a transaction method according to an embodiment of this application. FIG. 13 shows a verification device, a payment device, and a server. As shown in FIG. 13, the transaction method is specifically as follows:
Step 1301. The payment device determines first information of the payment device.
Step 1302. The payment device sends the first information to the server.
Step 1303. The server determines a payment environment of the payment device based on the first information, and determines, based on the payment environment and a correspondence between a plurality of payment environments and a plurality of verification methods, a target verification method to be used by the verification device.
   The target verification method is used to verify an identity of an owner of a payment account that is used to perform a current transaction in the payment device. The target verification method is a verification method that is in the plurality of verification methods and that is corresponding to the payment environment. The payment device, the verification device, and the payment account have been associated with each other.
Step 1304. The server sends third instruction information to the payment device, where the third instruction information is used to instruct the verification device to verify an identity of an owner of the payment account by using the target verification method.
Step 1305. The payment device sends the third instruction information to the verification device.
Step 1306. The verification device verifies, based on the target verification method, the identity of the owner of the payment account that is used to perform a current transaction.
Step 1307. The verification device sends a verification result to the payment device.
1308. If determining that the verification succeeds, the payment device performs a password-free payment operation.

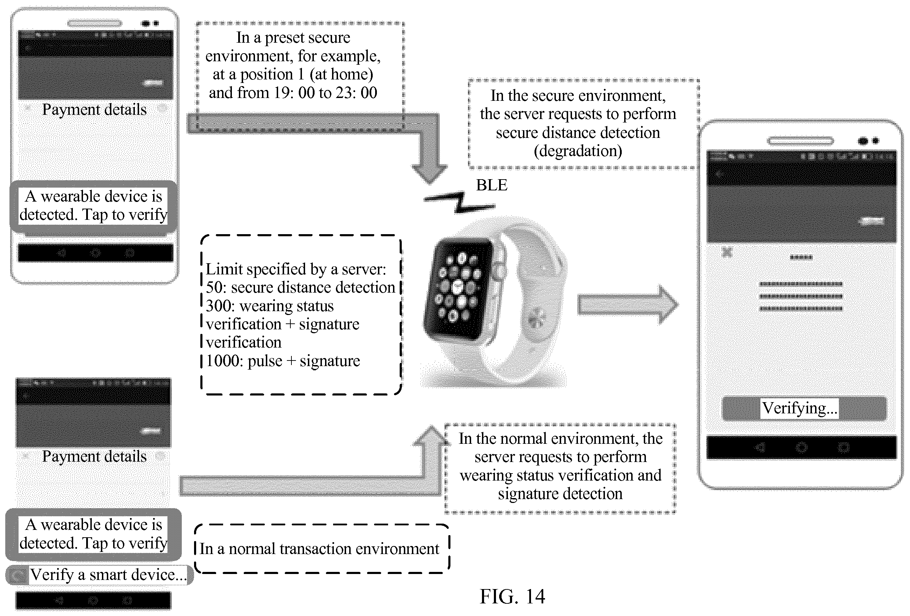

In step 1301 to step 1308, it may be preset that a payment environment in which the payment device performs payment at home (in a manner of connecting to Wi-Fi at home, positioning, or the like) or at night is a secure environment, and the server may select a verification method with a relatively low security level for a transaction performed in the secure environment. For example, FIG. 14 is a schematic diagram of an interface of a transaction method according to an embodiment of this application. When a payment device is in a normal scenario, a verification device needs to perform signature verification. When a payment device is in a secure environment, a lower-level verification method may be selected, that is, a secure distance is detected (whether the secure distance between a wearable device and the payment device is less than a preset value is determined), to reduce operation complexity and processing pressure of a server.

It should be noted that, the target verification method shown in FIG. 11 to FIG. 14 is a verification method corresponding to the payment environment of the payment device, and the target verification method in FIG. 3 to FIG. 10 is a verification method corresponding to the target password-free limit.

It should also be noted that, if one payment device is connected to a plurality of associated verification devices, a verification device corresponding to a verification method selected by the server is a verification device that performs a current transaction. Alternatively, the server may select, from a plurality of verification devices based on a plurality of pieces of first information of the plurality of verification devices, a verification device that is used to perform current verification, so that the verification device verifies, by using the target verification method determined by the server, the identity of the owner of the payment account that is used to perform the current transaction.

For example, with reference to Table 1, if a mobile phone is bound to two verification devices: a watch (a verification method is pulse verification and secure distance detection) and glasses (a verification method is iris verification and secure distance detection), the mobile phone may send device types of the two verification devices to the server. The server determines verification methods supported by the two verification devices; selects the watch with a higher security level as a to-be-used verification device; and selects, for the watch, pulse verification as the target verification method to verify the identity of the owner of the payment account that is used to perform the current transaction.

It should be understood that, the server may determine, based on the environment of the payment device, a verification method to be used by the verification device, and may further determine the target verification method based on a current transaction amount or another factor. No limitation is imposed in this embodiment of this application.

It should be further understood that, when determining the verification method to be used by the verification device, the server may further set an appropriate password-free limit for the verification method to implement password-free payment of the payment device. For example, the server pre-determines a security level of each verification method of the verification device associated with the payment account (therefore, the verification method can meet a corresponding security requirement). During transaction, the server first determines, based on transaction information (payment environment information, a transaction amount, or the like), whether password-free payment can be implemented (the server first determines a security requirement of a transaction, and then determines whether the requirement can be met by the verification device). If password-free payment can be implemented, the server determines a verification method. If password-free payment cannot be implemented, the server requests a user to enter a password or provide another verification method (such as an SMS verification code or a USB key) that meets the security requirement of the transaction.

It should also be understood that, sequence numbers of the foregoing processes do not mean execution sequences. The execution sequences of the processes should be determined based on functions and internal logic of the processes, and should not be construed as any limitation on the implementation processes of the embodiments of this application.

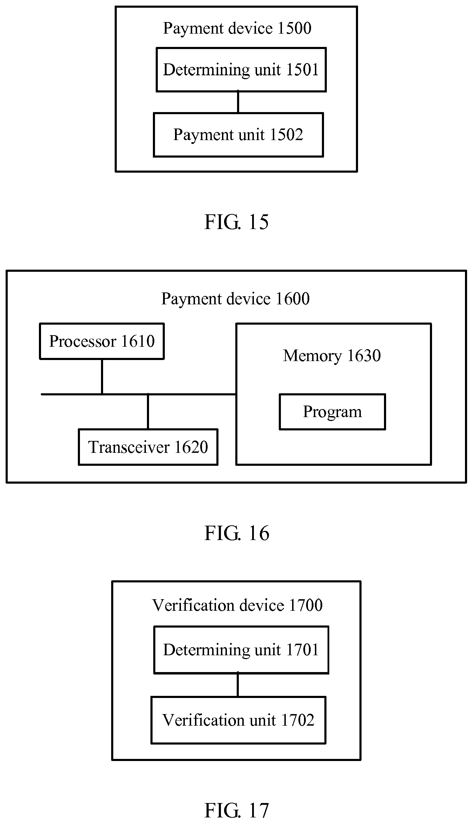

The foregoing describes in detail the transaction method according to the embodiments of the present invention with reference to FIG. 1 to FIG. 14. The following describes in detail a payment device, a verification device, and a server according to the embodiments of the present invention with reference to FIG. 15 to FIG. 24.

FIG. 15 is a schematic block diagram of a payment device according to an embodiment of the present invention. It should be understood that the embodiment of the payment device and the method embodiments are corresponding to each other. For similar descriptions, refer to the method embodiments. A payment device 1500 shown in FIG. 15 is corresponding to the payment device in FIG. 3 to FIG. 10. The payment device 1500 includes:
a determining unit 1501, configured to determine a target password-free limit of a payment account that is used to perform a current transaction, where the target password-free limit is a password-free limit that is in a plurality of password-free limits and that is corresponding to a target verification method of a verification device, the target verification method is used by the verification device to verify an identity of an owner of the payment account, there is a correspondence between the plurality of password-free limits and a plurality of verification methods, and the payment device, the verification device, and the payment account have been associated with each other; and
a payment unit 1502, configured to: after the verification performed by the verification device on the identity of the owner of the payment account by using the target verification method succeeds, set a payment status of the payment account to a password-free payment state for the target password-free limit based on the target password-free limit determined by the determining unit, so that the payment account can implement password-free payment when a transaction amount of the current transaction is less than or equal to the target password-free limit.

In this embodiment of this application, different password-free limits are set for verification methods with different security levels. Therefore, respective verification features of different verification methods are fully used to provide different levels of password-free capabilities, thereby meeting a requirement of verifying an identity in payment scenarios having different security requirements, and implementing password-free payment for a transaction while improving security of the transaction.

Optionally, the determining unit 1501 is specifically configured to: send first instruction information to the verification device, where the first instruction information is used to instruct the verification device to verify the identity of the owner of the payment account by using a verification method with a highest priority in a first list stored in the verification device, and the first list includes at least one verification method supported by the verification device; receive a verification result sent by the verification device according to the first instruction information, where the verification result includes an identifier used to indicate the verification method with the highest priority; and determine the verification method with the highest priority as the target verification method, and determine, based on the target verification method and a second list stored in the payment device, that the password-free limit corresponding to the target verification method is the target password-free limit, where the second list includes the correspondence between the plurality of verification methods and the plurality of password-free limits, and the plurality of verification methods include the at least one verification method in the first list.

Optionally, the determining unit 1501 is specifically configured to: send first instruction information to the verification device, where the first instruction information is used to instruct the verification device to verify the identity of the owner of the payment account by using a verification method with a highest priority in a first list, and the first list includes at least one verification method supported by the verification device, and further includes at least one password-free limit corresponding to the at least one verification method; and receive a verification result sent by the verification device according to the first instruction information, where the verification result includes the target password-free limit, and the target password-free limit is a password-free limit corresponding to the verification method with the highest priority.

Optionally, the password-free limit corresponding to the verification method with the highest priority is a maximum password-free limit in the first list.

Optionally, the determining unit 1501 is specifically configured to: obtain transaction amount information of the transaction, where the transaction amount information includes the transaction amount of the transaction or an amount range of the transaction amount; and obtain, from the plurality of password-free limits based on the transaction amount information, the target password-free limit that matches the transaction amount information.

Optionally, the determining unit 1501 is specifically configured to: send the transaction amount information to the verification device, so that the verification device determines, from a first list stored in the verification device, the target password-free limit that matches the transaction amount, and determines, based on the target password-free limit and the first list, the target verification method corresponding to the target password-free limit; and receive a verification result sent by the verification device, where the verification result includes the target password-free limit.

Optionally, the payment device further includes a sending unit, and the determining unit 1501 is specifically configured to: determine, based on the transaction amount information from a second list stored in the payment device, the target password-free limit that matches the transaction amount.

The determining unit 1501 is further configured to: determine, based on the target password-free limit and the second list, the target verification method corresponding to the target password-free limit; and
send second instruction information to the verification device, where the second instruction information is used to instruct the verification device to verify the payment account by using the target verification method; or send the target password-free limit to the verification device, so that the verification device determines, based on the target password-free limit, the target verification method corresponding to the target password-free limit, and verifies the identity of the owner of the payment account based on the target verification method.

Optionally, the determining unit 1501 is specifically configured to: obtain the transaction amount information entered by a user on the payment device; or receive the transaction amount information sent by a server.

Optionally, the verification device is a target verification device in N verification devices associated with the payment device, N≥1, and the determining unit 1501 is further configured to: before determining the target password-free limit of the payment account that is used to perform the current transaction, determine the target verification device from the N verification devices.

Optionally, the target verification device is a verification device indicated by first input performed by the user on the payment device; or the target verification device is a verification device to which a verification method with a highest priority in N first lists in the N verification devices belongs; or the target verification device is a verification device to which a maximum password-free limit in the N first lists belongs.

Optionally, the sending unit is further configured to: before the determining unit 1501 determines the target password-free limit of the payment account that is used to perform the current transaction, send a request message to the server, where the request message is used to request to enable a function of using the verification device to verify the identity of the owner of the payment account.

The receiving unit is further configured to receive the second list sent by the server according to the request message, where a password-free limit corresponding to each verification method in the second list is determined by the server based on a security level of each verification method.

Optionally, the receiving unit is further configured to: before the determining unit 1501 determines the target password-free limit of the payment account that is used to perform the current transaction, receive device information sent by the verification device, where the device information includes the at least one verification method supported by the verification device. The sending unit is further configured to send the request message to the server, where the request message includes the device information, and the request message is used to request to enable the function of using the verification device to verify the identity of the owner of the payment account. The receiving unit is further configured to receive the first list sent by the server according to the device information, where the first list includes the at least one verification method that is verified by the server, or the first list includes the at least one verification method and the at least one password-free limit corresponding to the at least one verification method, and a password-free limit corresponding to each verification method in the first list is determined by the server based on a security level of each verification method. The sending unit is further configured to send the first list to the verification device.

Optionally, the payment device includes a mobile phone, and the verification device includes a wearable device; or the payment device includes a wearable device, and the verification device includes a mobile phone.

It should be understood that the payment device 1500 according to this embodiment of the present invention may be corresponding to the payment device in the embodiments of the present invention, and the foregoing and other operations and/or functions of the units in the payment device 1500 are respectively intended to implement the corresponding processes of the methods in FIG. 3 to FIG. 10. For brevity, details are not described herein again.

FIG. 16 is a schematic structural diagram of a payment device 1600 according to an embodiment of this application. As shown in FIG. 16, the payment device includes a processor 1610, a transceiver 1620, and a memory 1630. The processor 1610, the transceiver 1620, and the memory 1630 communicate with each other by using an inner connection path. The memory 1630 is configured to store an instruction. The processor 1610 is configured to execute the instruction stored in the memory 1630, to control the transceiver 1620 to receive a signal or send a signal.

The processor 1610 is specifically configured to: determine a target password-free limit of a payment account that is used to perform a current transaction, where the target password-free limit is a password-free limit that is in a plurality of password-free limits and that is corresponding to a target verification method of a verification device, the target verification method is used by the verification device to verify an identity of an owner of the payment account, there is a correspondence between the plurality of password-free limits and a plurality of verification methods, and the payment device, the verification device, and the payment account have been associated with each other; and after the verification performed by the verification device on the identity of the owner of the payment account by using the target verification method succeeds, set a payment status of the payment account device to a password-free payment state for the target password-free limit based on the target password-free limit determined by the determining unit, so that the payment account device can implement password-free payment when a transaction amount of the current transaction is less than or equal to the target password-free limit.

It should be understood that in this embodiment of the present invention, the processor 1610 may be a central processing unit (Central Processing Unit, CPU), or the processor 1610 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 1630 may include a read-only memory and a random access memory, and provide an instruction and data for the processor 1610. A part of the memory 1630 may further include a nonvolatile random access memory. For example, the memory 1630 may further store information of a device type.

In an implementation process, steps of the foregoing method can be implemented by using an integrated logical circuit of hardware in the processor 1610 or an instruction in a form of software. The steps of the positioning method disclosed with reference to the embodiments of the present invention may be directly performed and completed by a hardware processor, or may be performed and completed by using a combination of hardware in the processor 1610 and a software module. The software module may be located in a mature storage medium in the art, such as a random access memory, a flash memory, a read-only memory, a programmable read-only memory, an electrically erasable programmable memory, or a register. The storage medium is located in the memory 1630. The processor 1610 reads information in the memory 1630 and completes the steps of the foregoing method in combination with hardware of the processor. To avoid repetition, details are not described herein again.

The payment device 1600 according to this embodiment of the present invention may be corresponding to the payment device configured to perform the methods in FIG. 3 to FIG. 10, and the payment device 1500 according to the embodiments of the present invention. In addition, units or modules in the payment device 1600 are separately configured to perform actions or processing processes performed by the payment device in FIG. 3 to FIG. 10. To avoid repetition, detailed descriptions are omitted herein.

FIG. 17 is a schematic block diagram of a verification device according to an embodiment of the present invention. It should be understood that the embodiment of the verification device and the method embodiments are corresponding to each other. For similar descriptions, refer to the method embodiments. A verification device 1700 shown in FIG. 17 is corresponding to the verification device in FIG. 3 to FIG. 10. The verification device 1700 includes:
a determining unit 1701, configured to determine a to-be-used target verification method, where the target verification method is used to verify an identity of an owner of a payment account that is used to perform a current transaction in a payment device, the target verification method is a verification method that is in at least one verification method supported by the verification device and that is corresponding to a target password-free limit of the payment account, there is a correspondence between the at least one verification method and at least one password-free limit, and the payment device, the verification device, and the payment account have been associated with each other; and
a verification unit 1702, configured to verify the identity of the owner of the payment account based on the target verification method determined by the determining unit 1701.

In this embodiment of this application, different password-free limits are set for verification methods with different security levels. Therefore, respective verification features of different verification methods are fully used to provide different levels of password-free capabilities, thereby meeting a requirement of verifying an identity in payment scenarios having different security requirements, and implementing password-free payment for a transaction while improving security of the transaction.

Optionally, the determining unit 1701 is specifically configured to receive first instruction information sent by the payment device, where the first instruction information is used to instruct the verification device to verify the identity of the owner of the payment account by using a verification method with a highest priority in a first list stored in the verification device, and the first list includes the at least one verification method supported by the verification device.

The verification unit 1702 is specifically configured to: determine the verification method with the highest priority as the target verification method, and verify the identity of the owner of the payment account based on the target verification method.

Optionally, the verification device further includes a sending unit, configured to send a verification result to the payment device according to the first instruction information, where the verification result includes an identifier used to indicate the verification method with the highest priority, so that the payment device determines the verification method with the highest priority as the target verification method, and determines, based on the target verification method and a second list stored in the payment device, that a password-free limit corresponding to the target verification method is the target password-free limit, where the second list includes a correspondence between a plurality of verification methods and a plurality of password-free limits, and the plurality of verification methods include the at least one verification method in the first list.

Optionally, the determining unit 1701 is further configured to determine, based on the verification method with the highest priority and the first list, the target password-free limit corresponding to the verification method with the highest priority, where the first list further includes the at least one password-free limit corresponding to the at least one verification method.

The sending unit is further configured to send a verification result to the payment device, where the verification result includes the target password-free limit.

Optionally, the password-free limit corresponding to the verification method with the highest priority is a maximum password-free limit in the first list.

Optionally, the determining unit 1701 is specifically configured to: receive transaction amount information sent by the payment device, where the transaction amount information includes a transaction amount that is of the transaction and that is entered by a user on the payment device or an amount range of the transaction amount; determine, from the at least one password-free limit based on the transaction amount information, the target password-free limit that matches the transaction amount information; and determine, based on the target password-free limit and a first list stored in the verification device, the target verification method corresponding to the target password-free limit, where the first list includes the at least one verification method supported by the verification device and the at least one password-free limit corresponding to the at least one verification method.

The sending unit is further configured to send a verification result to the payment device, where the verification result includes the target password-free limit.

Optionally, the determining unit 1701 is specifically configured to receive second instruction information sent by the payment device, where the second instruction information is used to instruct the verification device to verify the identity of the owner of the payment account by using the target verification method, the target verification method is determined by the payment device based on the target password-free limit and a second list stored in the payment device, and the target password-free limit is determined by the payment device based on transaction amount information entered by a user, or is determined by the payment device based on transaction amount information obtained from a server.

Optionally, the determining unit 1701 is specifically configured to: receive the target password-free limit sent by the payment device, where the target password-free limit is determined by the payment device based on transaction amount information entered by a user, or is determined by the payment device based on transaction amount information obtained from a server; and determine, based on the target password-free limit and a first list stored in the verification device, the target verification method corresponding to the target password-free limit, where the first list includes the at least one verification method supported by the verification device and the at least one password-free limit corresponding to the at least one verification method.

Optionally, the verification device further includes a receiving unit, and the sending unit is further configured to: before the verification device determines the to-be-used target verification method, send device information of the verification device to the payment device, so that the payment device forwards the device information to the server, where the device information includes the at least one verification method supported by the verification device.

The receiving unit is configured to: receive the first list forwarded by the payment device, or receive the first list sent by the server, where the first list includes the at least one verification method that is verified by the server, or the first list includes the at least one verification method and the at least one password-free limit corresponding to the at least one verification method, and a password-free limit corresponding to each verification method in the first list is determined by the server based on a security level of each verification method.

Optionally, the payment device includes a mobile phone, and the verification device includes a wearable device; or the payment device includes a wearable device, and the verification device includes a mobile phone.

It should be understood that the verification device 1700 according to this embodiment of the present invention may be corresponding to the verification device in the embodiments of the present invention, and the foregoing and other operations and/or functions of the units in the verification device 1700 are respectively intended to implement the corresponding processes of the methods in FIG. 3 to FIG. 10. For brevity, details are not described herein again.

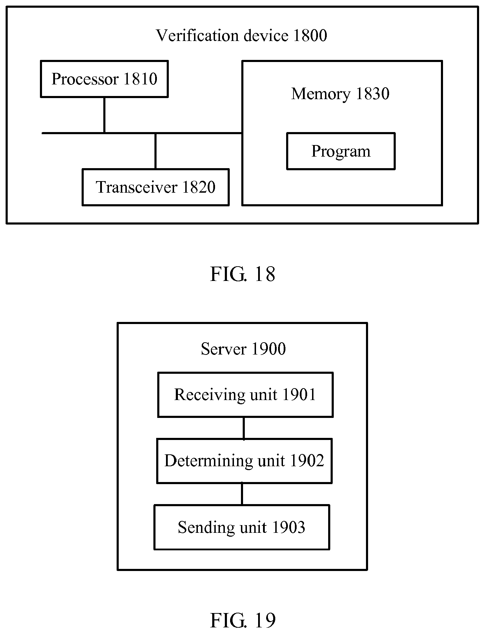

FIG. 18 is a schematic structural diagram of a verification device 1800 according to an embodiment of this application. As shown in FIG. 18, the verification device includes a processor 1810, a transceiver 1820, and a memory 1830. The processor 1810, the transceiver 1820, and the memory 1830 communicate with each other by using an inner connection path. The memory 1830 is configured to store an instruction. The processor 1810 is configured to execute the instruction stored in the memory 1830, to control the transceiver 1820 to receive a signal or send a signal.

The processor 1810 is specifically configured to determine a to-be-used target verification method, where the target verification method is used to verify an identity of an owner of a payment account that is used to perform a current transaction in a payment device, the target verification method is a verification method that is in at least one verification method supported by the verification device and that is corresponding to a target password-free limit of the payment account, there is a correspondence between the at least one verification method and at least one password-free limit, and the payment device, the verification device, and the payment account have been associated with each other; and verify the identity of the owner of the payment account based on the target verification method determined by the determining unit 1701.

It should be understood that in this embodiment of the present invention, the processor 1810 may be a central processing unit (Central Processing Unit, CPU), or the processor 1810 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 1830 may include a read-only memory and a random access memory, and provide an instruction and data for the processor 1810. A part of the memory 1830 may further include a nonvolatile random access memory. For example, the memory 1830 may further store information of a device type.

In an implementation process, steps of the foregoing method can be implemented by using an integrated logical circuit of hardware in the processor 1810 or an instruction in a form of software. The steps of the positioning method disclosed with reference to the embodiments of the present invention may be directly performed and completed by a hardware processor, or may be performed and completed by using a combination of hardware in the processor 1810 and a software module. The software module may be located in a mature storage medium in the art, such as a random access memory, a flash memory, a read-only memory, a programmable read-only memory, an electrically erasable programmable memory, or a register. The storage medium is located in the memory 1830. The processor 1810 reads information in the memory 1830 and completes the steps of the foregoing method in combination with hardware of the processor. To avoid repetition, details are not described herein again.

The verification device 1800 according to this embodiment of the present invention may be corresponding to the verification device configured to perform the methods in FIG. 3 to FIG. 10, and the verification device 1700 according to the embodiments of the present invention. In addition, units or modules in the verification device 1800 are separately configured to perform actions or processing processes performed by the verification device in FIG. 3 to FIG. 10. To avoid repetition, detailed descriptions are omitted herein.

FIG. 19 is a schematic block diagram of a server according to an embodiment of the present invention. It should be understood that the embodiment of the server and the method embodiments are corresponding to each other. For similar descriptions, refer to the method embodiments. A server 1900 shown in FIG. 19 is corresponding to the server in FIG. 3 to FIG. 10. The server 1900 includes:
a receiving unit 1901, configured to receive a request message sent by a payment device, where the request message includes device information of a verification device, the device information includes at least one verification method supported by the verification device, the at least one verification method is used to verify an identity of an owner of a payment account that is used to perform a transaction in the payment device, and the request message is used to request to enable a function of using the verification device to verify the identity of the owner of the payment account;
a determining unit 1902, configured to: verify the at least one verification method, and determine a first list based on a security level of the at least one verification method, where the first list includes the at least one verification method that is verified by the server, or includes the at least one verification method and at least one password-free limit corresponding to the at least one verification method; and
a sending unit 1903, configured to: send, to the verification device, the first list determined by the determining unit 1902; or send, by the server, the first list to the payment device, so that the payment device forwards the first list to the verification device.

In this embodiment of this application, different password-free limits are set for verification methods with different security levels. Therefore, respective verification features of different verification methods are fully used to provide different levels of password-free capabilities, thereby meeting a requirement of verifying an identity of an owner of a payment account in payment scenarios having different security requirements, and implementing password-free payment for a transaction while improving security of the transaction.

Optionally, the sending unit 1903 is further configured to send a second list to the payment device according to the request message, where the second list includes a correspondence between a plurality of verification methods and a plurality of password-free limits, and the plurality of verification methods include the at least one verification method in the first list.

Optionally, the payment device includes a mobile phone, and the verification device includes a wearable device; or the payment device includes a wearable device, and the verification device includes a mobile phone.

It should be understood that the server 1900 according to this embodiment of the present invention may be corresponding to the server in the embodiments of the present invention, and the foregoing and other operations and/or functions of the units in the server 1900 are respectively intended to implement the corresponding processes of the methods in FIG. 3 to FIG. 10. For brevity, details are not described herein again.

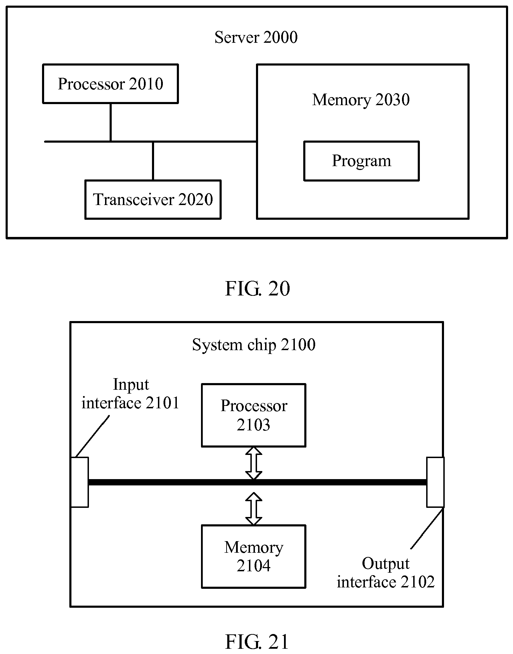

FIG. 20 is a schematic structural diagram of a server 2000 according to an embodiment of this application. As shown in FIG. 20, the server includes a processor 2010, a transceiver 2020, and a memory 2030. The processor 2010, the transceiver 2020, and the memory 2030 communicate with each other by using an inner connection path. The memory 2030 is configured to store an instruction. The processor 2010 is configured to execute the instruction stored in the memory 2030, to control the transceiver 2020 to receive a signal or send a signal.

The transceiver 2020 is specifically configured to receive a request message sent by a payment device, where the request message includes device information of a verification device, the device information includes at least one verification method supported by the verification device, the at least one verification method is used to verify an identity of an owner of a payment account that is used to perform a transaction in the payment device, and the request message is used to request to enable a function of using the verification device to verify the identity of the owner of the payment account.

The processor 2010 is specifically configured to: verify the at least one verification method, and determine a first list based on a security level of the at least one verification method, where the first list includes the at least one verification method that is verified by the server, or includes the at least one verification method and at least one password-free limit corresponding to the at least one verification method.

The transceiver 2020 is further configured to: send, to the verification device, the first list determined by the determining unit 1902; or send, by the server, the first list to the payment device, so that the payment device forwards the first list to the verification device.

It should be understood that in this embodiment of the present invention, the processor 2010 may be a central processing unit (Central Processing Unit, CPU), or the processor 2010 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 2030 may include a read-only memory and a random access memory, and provide an instruction and data for the processor 2010. A part of the memory 2030 may further include a nonvolatile random access memory. For example, the memory 2030 may further store information of a device type.

In an implementation process, steps of the foregoing method can be implemented by using an integrated logical circuit of hardware in the processor 2010 or an instruction in a form of software. The steps of the positioning method disclosed with reference to the embodiments of the present invention may be directly performed and completed by a hardware processor, or may be performed and completed by using a combination of hardware in the processor 2010 and a software module. The software module may be located in a mature storage medium in the art, such as a random access memory, a flash memory, a read-only memory, a programmable read-only memory, an electrically erasable programmable memory, or a register. The storage medium is located in the memory 2030. The processor 2010 reads information in the memory 2030 and completes the steps of the foregoing method in combination with hardware of the processor. To avoid repetition, details are not described herein again.

The server 2000 according to this embodiment of the present invention may be corresponding to the server configured to perform the methods in FIG. 3 to FIG. 10, and the server 1900 according to the embodiments of the present invention. In addition, units or modules in the server 2000 are separately configured to perform actions or processing processes performed by the server in FIG. 3 to FIG. 10. To avoid repetition, detailed descriptions are omitted herein.

FIG. 21 is a schematic structural diagram of a system chip according to an embodiment of this application. A system chip 2100 in FIG. 21 includes an input interface 2101, an output interface 2102, at least one processor 2103, and a memory 2104. The input interface 2101, the output interface 2102, the processor 2103, and the memory 2104 are connected to each other by using an inner connection path. The processor 2103 is configured to execute code in the memory 2104.

Optionally, when the code is executed, the processor 2103 may implement the method performed by the payment device in the method embodiments in FIG. 3 to FIG. 10. For brevity, details are not described herein again.

Optionally, when the code is executed, the processor 2103 may implement the method performed by the verification device in the method embodiments in FIG. 3 to FIG. 10. For brevity, details are not described herein again.

Optionally, when the code is executed, the processor 2103 may implement the method performed by the server in the method embodiments in FIG. 3 to FIG. 10. For brevity, details are not described herein again.

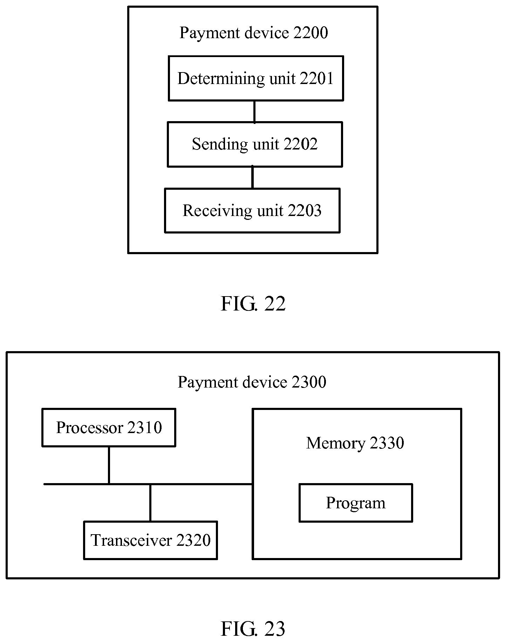

FIG. 22 is a schematic block diagram of a payment device according to an embodiment of the present invention. It should be understood that the embodiment of the payment device and the method embodiments are corresponding to each other. For similar descriptions, refer to the method embodiments. A payment device 2200 shown in FIG. 22 is corresponding to the payment device in FIG. 3 to FIG. 10. The payment device 2200 includes:
a determining unit 2201, configured to determine first information of the payment device, where the first information is used by the server to determine a current payment environment of the payment device;
a sending unit 2202, configured to send the first information to the server, so that the server determines, based on the first information, a target verification method to be used by the verification device, where the target verification method is used to verify an identity of an owner of a payment account that is used to perform a current transaction in the payment device, the target verification method is a verification method that is in a plurality of verification methods and that is corresponding to the payment environment, there is a correspondence between the plurality of verification methods and a plurality of payment environments, and the payment device, the verification device, and the payment account have been associated with each other; and
a receiving unit 2203, configured to receive third instruction information sent by the server according to the first information, where the third instruction information is used to instruct the verification device to verify the identity of the owner of the payment account by using the target verification method.

The sending unit 2202 is further configured to forward the third instruction information to the verification device.

In this embodiment of this application, the server sets verification methods with different security levels for different payment environment, so that respective verification features of different verification methods can be fully used to meet a requirement of verifying an identity of an owner of a payment account in payment scenarios having different security requirements.

Optionally, the first information includes at least one of the following: information about a geographical location of the payment device, a time period in which the payment device is currently located, and a device identity of a verification device associated with the payment device.

Optionally, the payment device includes a mobile phone, and the verification device includes a wearable device; or the payment device includes a wearable device, and the verification device includes a mobile phone.

It should be understood that the payment device 2200 according to this embodiment of the present invention may be corresponding to the payment device in the embodiments of the present invention, and the foregoing and other operations and/or functions of the units in the payment device 2200 are respectively intended to implement the corresponding processes of the methods in FIG. 11 to FIG. 14. For brevity, details are not described herein again.

FIG. 23 is a schematic structural diagram of a payment device 2300 according to an embodiment of this application. As shown in FIG. 23, the payment device includes a processor 2310, a transceiver 2320, and a memory 2330. The processor 2310, the transceiver 2320, and the memory 2330 communicate with each other by using an inner connection path. The memory 2330 is configured to store an instruction. The processor 2310 is configured to execute the instruction stored in the memory 2330, to control the transceiver 2320 to receive a signal or send a signal.

The processor 2310 is specifically configured to determine first information of the payment device, where the first information is used by the server to determine a current payment environment of the payment device.

The transceiver 2320 is specifically configured to: send the first information (the information about the payment environment) to the server, so that the server determines, based on the first information (the information about the payment environment), a target verification method to be used by the verification device, where the target verification method is used to verify an identity of an owner of a payment account that is used to perform a current transaction in the payment device, the target verification method is a verification method that is in a plurality of verification methods and that is corresponding to the payment environment, there is a correspondence between the plurality of verification methods and a plurality of payment environments, and the payment device, the verification device, and the payment account have been associated with each other; and forward the third instruction information to the verification device.

It should be understood that in this embodiment of the present invention, the processor 2310 may be a central processing unit (Central Processing Unit, CPU), or the processor 2310 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 2330 may include a read-only memory and a random access memory, and provide an instruction and data for the processor 2310. A part of the memory 2330 may further include a nonvolatile random access memory. For example, the memory 2330 may further store information of a device type.

In an implementation process, steps of the foregoing method can be implemented by using an integrated logical circuit of hardware in the processor 2310 or an instruction in a form of software. The steps of the positioning method disclosed with reference to the embodiments of the present invention may be directly performed and completed by a hardware processor, or may be performed and completed by using a combination of hardware in the processor 2310 and a software module. The software module may be located in a mature storage medium in the art, such as a random access memory, a flash memory, a read-only memory, a programmable read-only memory, an electrically erasable programmable memory, or a register. The storage medium is located in the memory 2330. The processor 2310 reads information in the memory 2330 and completes the steps of the foregoing method in combination with hardware of the processor. To avoid repetition, details are not described herein again.

The payment device 2300 according to this embodiment of the present invention may be corresponding to the payment device configured to perform the methods in FIG. 11 to FIG. 14, and the payment device 2200 according to the embodiments of the present invention. In addition, units or modules in the payment device 2300 are separately configured to perform actions or processing processes performed by the payment device in FIG. 11 to FIG. 14. To avoid repetition, detailed descriptions are omitted herein.

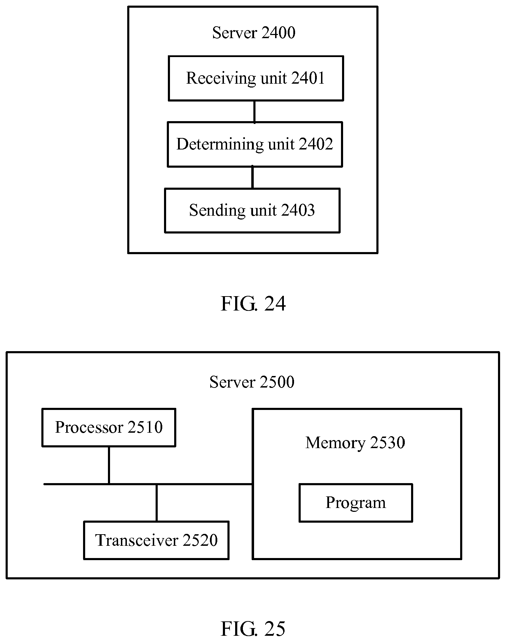

FIG. 24 is a schematic block diagram of a server according to an embodiment of the present invention. It should be understood that the embodiment of the server and the method embodiments are corresponding to each other. For similar descriptions, refer to the method embodiments. A server 2400 shown in FIG. 24 is corresponding to the server in FIG. 3 to FIG. 10. The server 2400 includes:
a receiving unit 2401, configured to receive first information of a payment device that is sent by the payment device, where the first information is used by the server to determine a current payment environment of the payment device;
a determining unit 2402, configured to: determine the payment environment of the payment device based on the first information received by the receiving unit, and determine, based on the payment environment and a correspondence between a plurality of payment environments and a plurality of verification methods, a target verification method to be used by the verification device, where the target verification method is used to verify an identity of an owner of a payment account that is used to perform a current transaction in the payment device, the target verification method is a verification method that is in the plurality of verification methods and that is corresponding to the payment environment, and the payment device, the verification device, and the payment account have been associated with each other; and
a sending unit 2403, configured to send third instruction information to the payment device, where the third instruction information is used to instruct the verification device to verify the identity of the owner of the payment account by using the target verification method.

The receiving unit 2401 is further configured to receive a verification result sent by the payment device, where the verification result is a verification result obtained by the verification device by verifying the identity of the owner of the payment account by using the target verification method.

In this embodiment of this application, verification methods with different security levels are set for different payment environment, so that respective verification features of different verification methods can be fully used to meet a requirement of verifying an identity of an owner of a payment account in payment scenarios having different security requirements.

Optionally, the information about the payment environment includes at least one of the following: information about a geographical location of the payment device, a time period in which the payment device is currently located, and a device identity of a verification device associated with the payment device.

Optionally, the payment device includes a mobile phone, and the verification device includes a wearable device; or the payment device includes a wearable device, and the verification device includes a mobile phone.

It should be understood that the server 2400 according to this embodiment of the present invention may be corresponding to the server in the embodiments of the present invention, and the foregoing and other operations and/or functions of the units in the server 2400 are respectively intended to implement the corresponding processes of the methods in FIG. 11 to FIG. 14. For brevity, details are not described herein again.

FIG. 25 is a schematic structural diagram of a server 2500 according to an embodiment of this application. As shown in FIG. 25, the server includes a processor 2510, a transceiver 2520, and a memory 2530. The processor 2510, the transceiver 2520, and the memory 2530 communicate with each other by using an inner connection path. The memory 2530 is configured to store an instruction. The processor 2510 is configured to execute the instruction stored in the memory 2530, to control the transceiver 2520 to receive a signal or send a signal.

The transceiver 2520 is specifically configured to receive information that is about a payment environment of a payment device and that is sent by the payment device.

The processor 2510 is specifically configured to determine, based on the information about the payment environment and a correspondence between a plurality of payment environments and a plurality of verification methods, a target verification method to be used by the verification device, where the target verification method is used to verify an identity of an owner of a payment account that is used to perform a current transaction in the payment device, the target verification method is a verification method that is in the plurality of verification methods and that is corresponding to the payment environment, and the payment device, the verification device, and the payment account have been associated with each other.

The transceiver 2520 is further configured to: send third instruction information to the payment device, where the third instruction information is used to instruct the verification device to verify the identity of the owner of the payment account by using the target verification method; and receive a verification result sent by the payment device, where the verification result is a verification result obtained by the verification device by verifying the identity of the owner of the payment account by using the target verification method.

It should be understood that in this embodiment of the present invention, the processor 2510 may be a central processing unit (Central Processing Unit, CPU), or the processor 2510 may be another general purpose processor, a digital signal processor (DSP), an application-specific integrated circuit (ASIC), a field programmable gate array (FPGA) or another programmable logic device, a discrete gate or a transistor logic device, a discrete hardware component, or the like. The general purpose processor may be a microprocessor, or the processor may be any conventional processor or the like.

The memory 2530 may include a read-only memory and a random access memory, and provide an instruction and data for the processor 2510. A part of the memory 2530 may further include a nonvolatile random access memory. For example, the memory 2530 may further store information of a device type.

In an implementation process, steps of the foregoing method can be implemented by using an integrated logical circuit of hardware in the processor 2510 or an instruction in a form of software. The steps of the positioning method disclosed with reference to the embodiments of the present invention may be directly performed and completed by a hardware processor, or may be performed and completed by using a combination of hardware in the processor 2510 and a software module. The software module may be located in a mature storage medium in the art, such as a random access memory, a flash memory, a read-only memory, a programmable read-only memory, an electrically erasable programmable memory, or a register. The storage medium is located in the memory 2530. The processor 2510 reads information in the memory 2530 and completes the steps of the foregoing method in combination with hardware of the processor. To avoid repetition, details are not described herein again.

The server 2500 according to this embodiment of the present invention may be corresponding to the server configured to perform the methods in FIG. 11 to FIG. 14, and the server 2400 according to the embodiments of the present invention. In addition, units or modules in the server 2500 are separately configured to perform actions or processing processes performed by the server in FIG. 11 to FIG. 14. To avoid repetition, detailed descriptions are omitted herein.

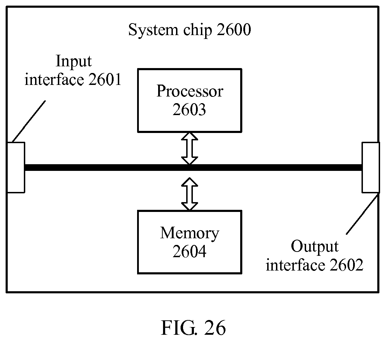

FIG. 26 is a schematic structural diagram of a system chip according to an embodiment of this application. A system chip 2600 in FIG. 26 includes an input interface 2601, an output interface 2602, at least one processor 2603, and a memory 2604. The input interface 2601, the output interface 2602, the processor 2603, and the memory 2604 are connected to each other by using an inner connection path. The processor 2603 is configured to execute code in the memory 2604.

Optionally, when the code is executed, the processor 2603 may implement the method performed by the payment device in the method embodiments in FIG. 11 to FIG. 14. For brevity, details are not described herein again.

Optionally, when the code is executed, the processor 2603 may implement the method performed by the server in the method embodiments in FIG. 11 to FIG. 14. For brevity, details are not described herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of the present invention may be integrated into one processing unit, or each of the units may exist alone physically, or two or more units may be integrated into one unit.

When the functions are implemented in a form of a software function unit and sold or used as an independent product, the functions may be stored in a computer readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of the present invention, but are not intended to limit the protection scope of the embodiments of the present invention. Any variation or replacement readily figured out by a person skilled in the art within the technical scope disclosed in the embodiments of the present invention shall fall within the protection scope of the embodiments of the present invention. Therefore, the protection scope of the embodiments of the present invention shall be subject to the protection scope of the claims.

## Claims

1. A transaction method, wherein the method comprises:
determining, by a payment device, a target password-free limit of a payment account that is used to perform a current transaction, wherein the target password-free limit is a password-free limit that is in a plurality of password-free limits and that is corresponding to a target verification method of a verification device, the target verification method is used by the verification device to verify an identity of an owner of the payment account, there is a correspondence between the plurality of password-free limits and a plurality of verification methods, and the payment device, the verification device, and the payment account have been associated with each other; and
after the verification performed by the verification device on the identity of the owner of the payment account by using the target verification method succeeds, setting, by the payment device, a payment status of the payment account to a password-free payment state for the target password-free limit based on the target password-free limit, so that the payment account can implement password-free payment when a transaction amount of the current transaction is less than or equal to the target password-free limit.

2. The method according to claim 1, wherein the determining, by a payment device, a target password-free limit of a payment account that is used to perform a current transaction comprises:
sending, by the payment device, first instruction information to the verification device, wherein the first instruction information is used to instruct the verification device to verify the identity of the owner of the payment account by using a verification method with a highest priority in a first list stored in the verification device, and the first list comprises at least one verification method supported by the verification device;
receiving, by the payment device, a verification result sent by the verification device according to the first instruction information, wherein the verification result comprises an identifier used to indicate the verification method with the highest priority; and
determining, by the payment device, the verification method with the highest priority as the target verification method, and determining, based on the target verification method and a second list stored in the payment device, that the password-free limit corresponding to the target verification method is the target password-free limit, wherein the second list comprises the correspondence between the plurality of verification methods and the plurality of password-free limits, and the plurality of verification methods comprise the at least one verification method in the first list.

3. The method according to claim 1, wherein the determining, by a payment device, a target password-free limit of a payment account that is used to perform a current transaction comprises:
sending, by the payment device, first instruction information to the verification device, wherein the first instruction information is used to instruct the verification device to verify the identity of the owner of the payment account by using a verification method with a highest priority in a first list, and the first list comprises at least one verification method supported by the verification device, and further comprises at least one password-free limit corresponding to the at least one verification method; and
receiving, by the payment device, a verification result sent by the verification device according to the first instruction information, wherein the verification result comprises the target password-free limit, and the target password-free limit is a password-free limit corresponding to the verification method with the highest priority.

4. The method according to claim 2 or 3, wherein the password-free limit corresponding to the verification method with the highest priority is a maximum password-free limit in the first list.

5. The method according to claim 1, wherein the determining, by a payment device, a target password-free limit of a payment account that is used to perform a current transaction comprises:
obtaining, by the payment device, transaction amount information of the transaction, wherein the transaction amount information comprises the transaction amount of the transaction or an amount range of the transaction amount; and
obtaining, by the payment device from the plurality of password-free limits based on the transaction amount information, the target password-free limit that matches the transaction amount information.

6. The method according to claim 5, wherein the obtaining, by the payment device based on the transaction amount information, the target password-free limit that matches the transaction amount information comprises:
sending, by the payment device, the transaction amount information to the verification device, so that the verification device determines, from a first list stored in the verification device, the target password-free limit that matches the transaction amount, and determines, based on the target password-free limit and the first list, the target verification method corresponding to the target password-free limit; and
receiving, by the payment device, a verification result sent by the verification device, wherein the verification result comprises the target password-free limit.

7. The method according to claim 5, wherein the obtaining, by the payment device based on the transaction amount information, the target password-free limit that matches the transaction amount information comprises:
determining, by the payment device based on the transaction amount information from a second list stored in the payment device, the target password-free limit that matches the transaction amount; and
the method further comprises:
determining, by the payment device based on the target password-free limit and the second list, the target verification method corresponding to the target password-free limit; and
sending, by the payment device, second instruction information to the verification device, wherein the second instruction information is used to instruct the verification device to verify the payment account by using the target verification method; or
sending, by the payment device, the target password-free limit to the verification device, so that the verification device determines, based on the target password-free limit, the target verification method corresponding to the target password-free limit, and verifies the identity of the owner of the payment account based on the target verification method.

8. The method according to any one of claims 5 to 7, wherein the obtaining, by the payment device, transaction amount information of the transaction comprises:
obtaining, by the payment device, the transaction amount information entered by a user on the payment device; or
receiving, by the payment device, the transaction amount information sent by a server.

9. The method according to any one of claims 1 to 8, wherein the verification device is a target verification device in N verification devices associated with the payment device, and N≥1; and
before the determining, by a payment device, a target password-free limit of a payment account that is used to perform a current transaction, the method further comprises:
determining, by the payment device, the target verification device from the N verification devices.

10. The method according to claim 9, wherein
the target verification device is a verification device indicated by first input performed by the user on the payment device; or
the target verification device is a verification device to which a verification method with a highest priority in N first lists in the N verification devices belongs; or
the target verification device is a verification device to which a maximum password-free limit in the N first lists belongs.

11. The method according to any one of claims 1 to 10, wherein before the determining, by a payment device, a target password-free limit of a payment account that is used to perform a current transaction, the method further comprises:
sending, by the payment device, a request message to the server, wherein the request message is used to request to enable a function of using the verification device to verify the identity of the owner of the payment account; and
receiving, by the payment device, the second list sent by the server according to the request message, wherein a password-free limit corresponding to each verification method in the second list is determined by the server based on a security level of each verification method.

12. The method according to any one of claims 1 to 11, wherein before the determining, by a payment device, a target password-free limit of a payment account that is used to perform a current transaction, the method further comprises:
receiving, by the payment device, device information sent by the verification device, wherein the device information comprises the at least one verification method supported by the verification device;
sending, by the payment device, the request message to the server, wherein the request message comprises the device information, and the request message is used to request to enable the function of using the verification device to verify the identity of the owner of the payment account;
receiving, by the payment device, the first list sent by the server according to the device information, wherein the first list comprises the at least one verification method that is verified by the server, or the first list comprises the at least one verification method and the at least one password-free limit corresponding to the at least one verification method, and a password-free limit corresponding to each verification method in the first list is determined by the server based on a security level of each verification method; and
sending, by the payment device, the first list to the verification device.

13. The method according to any one of claims 1 to 12, wherein the payment device comprises a mobile phone, and the verification device comprises a wearable device; or the payment device comprises a wearable device, and the verification device comprises a mobile phone.

14. A transaction method, wherein the method comprises:
determining, by a verification device, a to-be-used target verification method, wherein the target verification method is used to verify an identity of an owner of a payment account that is used to perform a current transaction in a payment device, the target verification method is a verification method that is in at least one verification method supported by the verification device and that is corresponding to a target password-free limit of the payment account, there is a correspondence between the at least one verification method and at least one password-free limit, and the payment device, the verification device, and the payment account have been associated with each other; and
verifying, by the verification device, the identity of the owner of the payment account based on the target verification method.

15. The method according to claim 14, wherein the determining, by a verification device, a to-be-used target verification method comprises:
receiving, by the verification device, first instruction information sent by the payment device, wherein the first instruction information is used to instruct the verification device to verify the identity of the owner of the payment account by using a verification method with a highest priority in a first list stored in the verification device, and the first list comprises the at least one verification method supported by the verification device; and
the verifying, by the verification device, the identity of the owner of the payment account based on the target verification method comprises:
determining, by the verification device, the verification method with the highest priority as the target verification method, and verifying the identity of the owner of the payment account based on the target verification method.

16. The method according to claim 15, wherein the method further comprises:
sending, by the verification device, a verification result to the payment device according to the first instruction information, wherein the verification result comprises an identifier used to indicate the verification method with the highest priority, so that the payment device determines the verification method with the highest priority as the target verification method, and determines, based on the target verification method and a second list stored in the payment device, that a password-free limit corresponding to the target verification method is the target password-free limit, wherein the second list comprises a correspondence between a plurality of verification methods and a plurality of password-free limits, and the plurality of verification methods comprise the at least one verification method in the first list.

17. The method according to claim 15, wherein the method further comprises:
determining, by the verification device based on the verification method with the highest priority and the first list, the target password-free limit corresponding to the verification method with the highest priority, wherein the first list further comprises the at least one password-free limit corresponding to the at least one verification method; and
sending, by the verification device, a verification result to the payment device, wherein the verification result comprises the target password-free limit.

18. The method according to any one of claims 15 to 17, wherein the password-free limit corresponding to the verification method with the highest priority is a maximum password-free limit in the first list.

19. The method according to claim 14, wherein the determining, by a verification device, a to-be-used target verification method comprises:
receiving, by the verification device, transaction amount information sent by the payment device, wherein the transaction amount information comprises a transaction amount that is of the transaction and that is entered by a user on the payment device or an amount range of the transaction amount;
determining, by the verification device from the at least one password-free limit based on the transaction amount information, the target password-free limit that matches the transaction amount information; and
determining, by the verification device based on the target password-free limit and a first list stored in the verification device, the target verification method corresponding to the target password-free limit, wherein the first list comprises the at least one verification method supported by the verification device and the at least one password-free limit corresponding to the at least one verification method; and
the method further comprises:
sending, by the verification device, a verification result to the payment device, wherein the verification result comprises the target password-free limit.

20. The method according to claim 14, wherein the determining, by a verification device, a to-be-used target verification method comprises:
receiving, by the verification device, second instruction information sent by the payment device, wherein the second instruction information is used to instruct the verification device to verify the identity of the owner of the payment account by using the target verification method, the target verification method is determined by the payment device based on the target password-free limit and a second list stored in the payment device, and the target password-free limit is determined by the payment device based on transaction amount information entered by a user, or is determined by the payment device based on transaction amount information obtained from a server.

21. The method according to claim 14, wherein the determining, by a verification device, a to-be-used target verification method comprises:
receiving, by the verification device, the target password-free limit sent by the payment device, wherein the target password-free limit is determined by the payment device based on transaction amount information entered by a user, or is determined by the payment device based on transaction amount information obtained from a server; and
determining, by the verification device based on the target password-free limit and a first list stored in the verification device, the target verification method corresponding to the target password-free limit, wherein the first list comprises the at least one verification method supported by the verification device and the at least one password-free limit corresponding to the at least one verification method.

22. The method according to any one of claims 14 to 21, wherein before the determining, by a verification device, a to-be-used target verification method, the method further comprises:
sending, by the verification device, device information of the verification device to the payment device, so that the payment device forwards the device information to the server, wherein the device information comprises the at least one verification method supported by the verification device; and
receiving, by the verification device, the first list forwarded by the payment device, or receiving the first list sent by the server, wherein the first list comprises the at least one verification method that is verified by the server, or the first list comprises the at least one verification method and the at least one password-free limit corresponding to the at least one verification method, and a password-free limit corresponding to each verification method in the first list is determined by the server based on a security level of each verification method.

23. The method according to any one of claims 14 to 22, wherein the payment device comprises a mobile phone, and the verification device comprises a wearable device; or the payment device comprises a wearable device, and the verification device comprises a mobile phone.

24. A transaction method, wherein the method comprises:
receiving, by a server, a request message sent by a payment device, wherein the request message comprises device information of a verification device, the device information comprises at least one verification method supported by the verification device, the at least one verification method is used to verify an identity of an owner of a payment account that is used to perform a transaction in the payment device, and the request message is used to request to enable a function of using the verification device to verify the identity of the owner of the payment account;
verifying, by the server, the at least one verification method, and determining a first list based on a security level of the at least one verification method, wherein the first list comprises the at least one verification method that is verified by the server, or comprises the at least one verification method and at least one password-free limit corresponding to the at least one verification method; and
sending, by the server, the first list to the verification device; or sending, by the server, the first list to the payment device, so that the payment device forwards the first list to the verification device.

25. The method according to claim 24, wherein the method further comprises:
sending, by the server, a second list to the payment device according to the request message, wherein the second list comprises a correspondence between a plurality of verification methods and a plurality of password-free limits, and the plurality of verification methods comprise the at least one verification method in the first list.

26. The method according to claim 24 or 25, wherein the payment device comprises a mobile phone, and the verification device comprises a wearable device; or the payment device comprises a wearable device, and the verification device comprises a mobile phone.

27. A transaction method, wherein the method comprises:
determining, by a payment device, first information of the payment device, wherein the first information is used by the server to determine a current payment environment of the payment device;
sending, by the payment device, the first information to the server, so that the server determines, based on the first information, a target verification method to be used by the verification device, wherein the target verification method is used to verify an identity of an owner of a payment account that is used to perform a current transaction in the payment device, the target verification method is a verification method that is in a plurality of verification methods and that is corresponding to the payment environment, there is a correspondence between the plurality of verification methods and a plurality of payment environments, and the payment device, the verification device, and the payment account have been associated with each other;
receiving, by the payment device, third instruction information sent by the server according to the first information, wherein the third instruction information is used to instruct the verification device to verify the identity of the owner of the payment account by using the target verification method; and
forwarding, by the payment device, the third instruction information to the verification device.

28. The method according to claim 27, wherein the first information comprises at least one of the following:
information about a geographical location of the payment device, a time period in which the payment device is currently located, and a device identity of a verification device associated with the payment device.

29. The method according to claim 27 or 28, wherein the payment device comprises a mobile phone, and the verification device comprises a wearable device; or the payment device comprises a wearable device, and the verification device comprises a mobile phone.

30. A transaction method, wherein the method comprises:
receiving, by a server, first information of a payment device that is sent by the payment device, wherein the first information is used by the server to determine a current payment environment of the payment device;
determining, by the server based on the first information and a correspondence between a plurality of payment environments and a plurality of verification methods, a target verification method to be used by the verification device, wherein the target verification method is used to verify an identity of an owner of a payment account that is used to perform a current transaction in the payment device, the target verification method is a verification method that is in the plurality of verification methods and that is corresponding to the payment environment, and the payment device, the verification device, and the payment account have been associated with each other;
sending, by the server, third instruction information to the payment device, wherein the third instruction information is used to instruct the verification device to verify the identity of the owner of the payment account by using the target verification method; and
receiving, by the server, a verification result sent by the payment device, wherein the verification result is a verification result obtained by the verification device by verifying the identity of the owner of the payment account by using the target verification method.

31. The method according to claim 30, wherein the first information comprises at least one of the following:
information about a geographical location of the payment device, a time period in which the payment device is currently located, and a device identity of a verification device associated with the payment device.

32. The method according to claim 30 or 31, wherein the payment device comprises a mobile phone, and the verification device comprises a wearable device; or the payment device comprises a wearable device, and the verification device comprises a mobile phone.

33. A payment device, wherein the payment device comprises:
a determining unit, configured to determine a target password-free limit of a payment account that is used to perform a current transaction, wherein the target password-free limit is a password-free limit that is in a plurality of password-free limits and that is corresponding to a target verification method of a verification device, the target verification method is used by the verification device to verify an identity of an owner of the payment account, there is a correspondence between the plurality of password-free limits and a plurality of verification methods, and the payment device, the verification device, and the payment account have been associated with each other; and
a payment unit, configured to: after the verification performed by the verification device on the identity of the owner of the payment account by using the target verification method succeeds, set a payment status of the payment account to a password-free payment state for the target password-free limit based on the target password-free limit determined by the determining unit, so that the payment account can implement password-free payment when a transaction amount of the current transaction is less than or equal to the target password-free limit.

34. The payment device according to claim 33, wherein the determining unit is specifically configured to:
send first instruction information to the verification device, wherein the first instruction information is used to instruct the verification device to verify the identity of the owner of the payment account by using a verification method with a highest priority in a first list stored in the verification device, and the first list comprises at least one verification method supported by the verification device;
receive a verification result sent by the verification device according to the first instruction information, wherein the verification result comprises an identifier used to indicate the verification method with the highest priority; and
determine the verification method with the highest priority as the target verification method, and determine, based on the target verification method and a second list stored in the payment device, that the password-free limit corresponding to the target verification method is the target password-free limit, wherein the second list comprises the correspondence between the plurality of verification methods and the plurality of password-free limits, and the plurality of verification methods comprise the at least one verification method in the first list.

35. The payment device according to claim 33, wherein the determining unit is specifically configured to:
send first instruction information to the verification device, wherein the first instruction information is used to instruct the verification device to verify the identity of the owner of the payment account by using a verification method with a highest priority in a first list, and the first list comprises at least one verification method supported by the verification device, and further comprises at least one password-free limit corresponding to the at least one verification method; and
receive a verification result sent by the verification device according to the first instruction information, wherein the verification result comprises the target password-free limit, and the target password-free limit is a password-free limit corresponding to the verification method with the highest priority.

36. The payment device according to claim 34 or 35, wherein the password-free limit corresponding to the verification method with the highest priority is a maximum password-free limit in the first list.

37. The payment device according to claim 33, wherein the determining unit is specifically configured to:
obtain transaction amount information of the transaction, wherein the transaction amount information comprises the transaction amount of the transaction or an amount range of the transaction amount; and
obtain, from the plurality of password-free limits based on the transaction amount information, the target password-free limit that matches the transaction amount information.

38. The payment device according to claim 37, wherein the determining unit is specifically configured to:
send the transaction amount information to the verification device, so that the verification device determines, from a first list stored in the verification device, the target password-free limit that matches the transaction amount, and determines, based on the target password-free limit and the first list, the target verification method corresponding to the target password-free limit; and
receive a verification result sent by the verification device, wherein the verification result comprises the target password-free limit.

39. The payment device according to claim 37, wherein the payment device further comprises a sending unit, and the determining unit is specifically configured to:
determine, based on the transaction amount information from a second list stored in the payment device, the target password-free limit that matches the transaction amount; and
the determining unit is further configured to:
determine, based on the target password-free limit and the second list, the target verification method corresponding to the target password-free limit; and
send second instruction information to the verification device, wherein the second instruction information is used to instruct the verification device to verify the payment account by using the target verification method; or
send the target password-free limit to the verification device, so that the verification device determines, based on the target password-free limit, the target verification method corresponding to the target password-free limit, and verifies the identity of the owner of the payment account based on the target verification method.

40. The payment device according to any one of claims 37 to 39, wherein the determining unit is specifically configured to:
obtain the transaction amount information entered by a user on the payment device; or
receive the transaction amount information sent by a server.

41. The payment device according to any one of claims 33 to 40, wherein the verification device is a target verification device in N verification devices associated with the payment device, N>1, and the determining unit is further configured to:
before determining the target password-free limit of the payment account that is used to perform the current transaction, determine the target verification device from the N verification devices.

42. The payment device according to claim 41, wherein
the target verification device is a verification device indicated by first input performed by the user on the payment device; or
the target verification device is a verification device to which a verification method with a highest priority in N first lists in the N verification devices belongs; or
the target verification device is a verification device to which a maximum password-free limit in the N first lists belongs.

43. The payment device according to any one of claims 33 to 42, wherein the sending unit is further configured to:
before the determining unit determines the target password-free limit of the payment account that is used to perform the current transaction, send a request message to the server, wherein the request message is used to request to enable a function of using the verification device to verify the identity of the owner of the payment account; and
the receiving unit is further configured to receive the second list sent by the server according to the request message, wherein a password-free limit corresponding to each verification method in the second list is determined by the server based on a security level of each verification method.

44. The payment device according to any one of claims 33 to 43, wherein the receiving unit is further configured to:
before the determining unit determines the target password-free limit of the payment account that is used to perform the current transaction, receive device information sent by the verification device, wherein the device information comprises the at least one verification method supported by the verification device;
the sending unit is further configured to send the request message to the server, wherein the request message comprises the device information, and the request message is used to request to enable the function of using the verification device to verify the identity of the owner of the payment account;
the receiving unit is further configured to receive the first list sent by the server according to the device information, wherein the first list comprises the at least one verification method that is verified by the server, or the first list comprises the at least one verification method and the at least one password-free limit corresponding to the at least one verification method, and a password-free limit corresponding to each verification method in the first list is determined by the server based on a security level of each verification method; and
the sending unit is further configured to send the first list to the verification device.

45. The payment device according to any one of claims 33 to 44, wherein the payment device comprises a mobile phone, and the verification device comprises a wearable device; or the payment device comprises a wearable device, and the verification device comprises a mobile phone.

46. A verification device, wherein the verification device comprises:
a determining unit, configured to determine a to-be-used target verification method, wherein the target verification method is used to verify an identity of an owner of a payment account that is used to perform a current transaction in a payment device, the target verification method is a verification method that is in at least one verification method supported by the verification device and that is corresponding to a target password-free limit of the payment account, there is a correspondence between the at least one verification method and at least one password-free limit, and the payment device, the verification device, and the payment account have been associated with each other; and
a verification unit, configured to verify the identity of the owner of the payment account based on the target verification method determined by the determining unit.

47. The verification device according to claim 46, wherein the determining unit is specifically configured to:
receive first instruction information sent by the payment device, wherein the first instruction information is used to instruct the verification device to verify the identity of the owner of the payment account by using a verification method with a highest priority in a first list stored in the verification device, and the first list comprises the at least one verification method supported by the verification device; and
the verification unit is specifically configured to: determine the verification method with the highest priority as the target verification method, and verify the identity of the owner of the payment account based on the target verification method.

48. The verification device according to claim 47, wherein the verification device further comprises a sending unit, configured to:
send a verification result to the payment device according to the first instruction information, wherein the verification result comprises an identifier used to indicate the verification method with the highest priority, so that the payment device determines the verification method with the highest priority as the target verification method, and determines, based on the target verification method and a second list stored in the payment device, that a password-free limit corresponding to the target verification method is the target password-free limit, wherein the second list comprises a correspondence between a plurality of verification methods and a plurality of password-free limits, and the plurality of verification methods comprise the at least one verification method in the first list.

49. The verification device according to claim 47, wherein the determining unit is further configured to:
determine, based on the verification method with the highest priority and the first list, the target password-free limit corresponding to the verification method with the highest priority, wherein the first list further comprises the at least one password-free limit corresponding to the at least one verification method; and
the sending unit is further configured to send a verification result to the payment device, wherein the verification result comprises the target password-free limit.

50. The verification device according to any one of claims 46 to 49, wherein the password-free limit corresponding to the verification method with the highest priority is a maximum password-free limit in the first list.

51. The verification device according to claim 46, wherein the determining unit is specifically configured to:
receive transaction amount information sent by the payment device, wherein the transaction amount information comprises a transaction amount that is of the transaction and that is entered by a user on the payment device or an amount range of the transaction amount;
determine, from the at least one password-free limit based on the transaction amount information, the target password-free limit that matches the transaction amount information; and
determine, based on the target password-free limit and a first list stored in the verification device, the target verification method corresponding to the target password-free limit, wherein the first list comprises the at least one verification method supported by the verification device and the at least one password-free limit corresponding to the at least one verification method; and
the sending unit is further configured to send a verification result to the payment device, wherein the verification result comprises the target password-free limit.

52. The verification device according to claim 46, wherein the determining unit is specifically configured to:
receive second instruction information sent by the payment device, wherein the second instruction information is used to instruct the verification device to verify the identity of the owner of the payment account by using the target verification method, the target verification method is determined by the payment device based on the target password-free limit and a second list stored in the payment device, and the target password-free limit is determined by the payment device based on transaction amount information entered by a user, or is determined by the payment device based on transaction amount information obtained from a server.

53. The verification device according to claim 46, wherein the determining unit is specifically configured to:
receive the target password-free limit sent by the payment device, wherein the target password-free limit is determined by the payment device based on transaction amount information entered by a user, or is determined by the payment device based on transaction amount information obtained from a server; and
determine, based on the target password-free limit and a first list stored in the verification device, the target verification method corresponding to the target password-free limit, wherein the first list comprises the at least one verification method supported by the verification device and the at least one password-free limit corresponding to the at least one verification method.

54. The verification device according to any one of claims 46 to 53, wherein the verification device further comprises a receiving unit, and the sending unit is further configured to:
before the verification device determines the to-be-used target verification method, send device information of the verification device to the payment device, so that the payment device forwards the device information to the server, wherein the device information comprises the at least one verification method supported by the verification device; and
the receiving unit is configured to: receive the first list forwarded by the payment device, or receive the first list sent by the server, wherein the first list comprises the at least one verification method that is verified by the server, or the first list comprises the at least one verification method and the at least one password-free limit corresponding to the at least one verification method, and a password-free limit corresponding to each verification method in the first list is determined by the server based on a security level of each verification method.

55. The verification device according to any one of claims 46 to 54, wherein the payment device comprises a mobile phone, and the verification device comprises a wearable device; or the payment device comprises a wearable device, and the verification device comprises a mobile phone.

56. A server, wherein the server comprises:
a receiving unit, configured to receive a request message sent by a payment device, wherein the request message comprises device information of a verification device, the device information comprises at least one verification method supported by the verification device, the at least one verification method is used to verify an identity of an owner of a payment account that is used to perform a transaction in the payment device, and the request message is used to request to enable a function of using the verification device to verify the identity of the owner of the payment account;
a determining unit, configured to: verify the at least one verification method, and determine a first list based on a security level of the at least one verification method, wherein the first list comprises the at least one verification method that is verified by the server, or comprises the at least one verification method and at least one password-free limit corresponding to the at least one verification method; and
a sending unit, configured to: send, to the verification device, the first list determined by the determining unit; or send, by the server, the first list to the payment device, so that the payment device forwards the first list to the verification device.

57. The server according to claim 56, wherein the sending unit is further configured to:
send a second list to the payment device according to the request message, wherein the second list comprises a correspondence between a plurality of verification methods and a plurality of password-free limits, and the plurality of verification methods comprise the at least one verification method in the first list.

58. The server according to claim 56 or 57, wherein the payment device comprises a mobile phone, and the verification device comprises a wearable device; or the payment device comprises a wearable device, and the verification device comprises a mobile phone.

59. A payment device, wherein the payment device comprises:
a determining unit, configured to determine first information of the payment device, wherein the first information is used by the server to determine a current payment environment of the payment device;
a sending unit, configured to send the first information to the server, so that the server determines, based on the first information, a target verification method to be used by the verification device, wherein the target verification method is used to verify an identity of an owner of a payment account that is used to perform a current transaction in the payment device, the target verification method is a verification method that is in a plurality of verification methods and that is corresponding to the payment environment, there is a correspondence between the plurality of verification methods and a plurality of payment environments, and the payment device, the verification device, and the payment account have been associated with each other; and
a receiving unit, configured to receive third instruction information sent by the server according to the first information, wherein the third instruction information is used to instruct the verification device to verify the identity of the owner of the payment account by using the target verification method, wherein
the sending unit is further configured to forward the third instruction information to the verification device.

60. The payment device according to claim 59, wherein the first information comprises at least one of the following:
information about a geographical location of the payment device, a time period in which the payment device is currently located, and a device identity of a verification device associated with the payment device.

61. The payment device according to claim 59 or 60, wherein the payment device comprises a mobile phone, and the verification device comprises a wearable device; or the payment device comprises a wearable device, and the verification device comprises a mobile phone.

62. A server, wherein the server comprises:
a receiving unit, configured to receive first information of a payment device that is sent by the payment device, wherein the first information is used by the server to determine a current payment environment of the payment device;
a determining unit, configured to: determine the payment environment of the payment device based on the first information received by the receiving unit, and determine, based on the payment environment and a correspondence between a plurality of payment environments and a plurality of verification methods, a target verification method to be used by the verification device, wherein the target verification method is used to verify an identity of an owner of a payment account that is used to perform a current transaction in the payment device, the target verification method is a verification method that is in the plurality of verification methods and that is corresponding to the payment environment, and the payment device, the verification device, and the payment account have been associated with each other; and
a sending unit, configured to send third instruction information to the payment device, wherein the third instruction information is used to instruct the verification device to verify the identity of the owner of the payment account by using the target verification method, wherein
the receiving unit is further configured to receive a verification result sent by the payment device, wherein the verification result is a verification result obtained by the verification device by verifying the identity of the owner of the payment account by using the target verification method.

63. The server according to claim 62, wherein the first information comprises at least one of the following:
information about a geographical location of the payment device, a time period in which the payment device is currently located, and a device identity of a verification device associated with the payment device.

64. The server according to claim 62 or 63, wherein the payment device comprises a mobile phone, and the verification device comprises a wearable device; or the payment device comprises a wearable device, and the verification device comprises a mobile phone.
